# EUROPEAN PATENT APPLICATION

(11) **EP 3 067 852 A1**
(43) Date of publication of application: **14.09.2016**
(21) Application number: 14860468.9
(22) Date of filing: 22.10.2014
(51) Int. Cl.: G06Q 50/12, G06Q 30/06, G07G 1/00, G07G 1/12

(54) **ORDER MANAGEMENT SYSTEM, ORDER MANAGEMENT METHOD, AND PROGRAM**

(30) Priority: 05.11.2013 JP 2013229844
(71) Applicant: Meet Co., Ltd., Kobe-shi, Hyogo 650-0022 (JP)
(72) Inventor: UEDA Hiroyuki, Kobe-shi Hyogo 650-0023 (JP)
(74) Representative: dompatent von Kreisler Selting Werner - Partnerschaft von Patent- und Rechtsanwälten mbB
(86) International application number: PCT/JP2014/078148
(87) International publication number: WO 2015/068577

(57) **Abstract**

An objective is to provide an order management system, an order management method, and a program that eliminate the need to call a waitperson and allow each person to efficiently place an order as necessary. The order management system of the present invention includes: a server communicating with a user terminal, which is capable of wireless communication with a wireless communication terminal, across a first network and with a kitchen terminal across a second network; the server comprising a user information registration means, a restaurant information registration means, and a wireless communication terminal registration means; the server storing visit information transmitted from a user terminal based on wireless communication between the user terminal and the wireless communication terminal; the server transmitting menu information to the user terminal based on the visit information; the server receiving order reception based on the menu information from the user terminal; and the server transmitting the order information and the wireless communication terminal information included in the order reception information to the kitchen terminal.

## Description

### [TECHNICAL FIELD]

The present invention relates to an order management system, an order management method, and a program.

### [BACKGROUND ART]

In general, in order to order a menu in restaurant etc., one calls a waitperson of the restaurant etc. and orders a menu from the waitperson. As a method of calling the waitperson, real voice of a customer is common; alternatively, a bell provided to a seat, a buzzer connected to a kitchen and the like may also be used.

However, with such methods, it takes time until the waitperson arrives at the seat. Furthermore, if there is no available waitperson, one may have to wait until a waitperson becomes available.

In view of such inconvenience, recently, a method of providing each table with a touch screen terminal and making a customer select a menu displayed on the touch screen terminal to order has been adopted. As an order system using such a touch screen terminal, for example, "BORDER SYSTEM" disclosed in Japanese Unexamined Patent Application Publication No. H07-105287 has been proposed.

In the order system, a customer seat device including an input touch panel and a display monitor, and a kitchen device including an input touch panel and a display monitor are configured to be able to communicate with each other, the customer seat device being provided on each table and the kitchen device being provided at each kitchen. Given this, with the order system, a content of an input that a customer has made from the input touch panel of the customer seat device can be displayed on the kitchen device. Accordingly, the order system eliminates the need to call a waitperson for each order and allows efficient placement of order.

Nevertheless, with the order system, since a customer needs to use the customer seat device provided on each table to place an order, for example in a case of having a meal in a group of people, each person needs to look at the display monitor of the customer seat device and select a desired menu, and then input orders through the input touch screen device in turns. Therefore, with the order system, it would take too long for all members to input their orders, and it may be faster to call a waitperson, depending on the number of people in the customer seat.

### [PRIOR ART DOCUMENTS]

### [PATENT DOCUMENTS]

Patent Document 1: Japanese Unexamined Patent Application Publication No. H07-105287

### [SUMMARY OF THE INVENTION]

### [PROBLEMS TO BE SOLVED BY THE INVENTION]

The present invention has been made in view of such circumstances, and an objective thereof is to provide an order management system, an order management method, and a program that eliminate the need to call a waitperson and allow each person to efficiently place an order as necessary.

### [MEANS FOR SOLVING THE PROBLEMS]

An order management system according to the present invention having been made for solving the above described problem includes
a server that communicates with a user terminal, which is capable of wireless communication with a wireless communication terminal, across a first network and with a kitchen terminal across a second network,
in which the server has:
a user information registration means for registering user information including user identification data of the user terminal;
a restaurant information registration means for registering restaurant information including restaurant identification data, kitchen terminal identification data, and menu information;
a wireless communication terminal information registration means for registering wireless communication terminal information including wireless communication terminal identification data in association with the restaurant information;
a visit information storage means for storing visit information, which includes the wireless communication terminal identification data received by the user terminal via wireless communication and the user identification data of the user terminal, the visit information being transmitted from said user terminal;
a menu information transmission means for transmitting corresponding menu information to the user terminal having transmitted the visit information;
an order receipt information storage means for storing order receipt information including order information, which is selected by a user based on the menu information transmitted to the user terminal and transmitted from the user terminal, and the visit information; and
an order receipt information transmission means for transmitting at least the order information among the order receipt information and the wireless communication terminal information to a corresponding kitchen terminal.

The order management system transmits the menu information to the user terminal based on wireless communication between the wireless communication terminal and the user terminal. The customer can voluntarily check the menu information displayed on his/her own user terminal (mobile phone, smart phone, tablet terminal etc.). Consequently, according to the order management system, for example even in the case of a large number of customers being seated at a table, each person can display the menu information on his/her own user terminal and can look at the menu information simultaneously. In addition, in the order management system, the server receives the order information regarding a menu, among the menu information displayed on the user terminal, selected by a user of said user terminal and can transmit the order information to the kitchen terminal, to thereby eliminate the need to call a waitperson for placing an order and allow efficient placement of order as necessary.

It is preferable that the order receipt information transmission means transmits at least the order information, among the order receipt information, to the user terminal having transmitted said order receipt information. As a result, order contents can be displayed to the customer having placed the order.

It is preferable that the server includes: a preparation completion information storage means for storing preparation completion information transmitted from the kitchen terminal in response to the order receipt information; and a preparation completion information transmission means for transmitting the preparation completion information to the kitchen terminal and to the user terminal having transmitted the order receipt information. This allows kitchen staff to manage a preparation status of the order and the customer to check the preparation status of a menu etc. that he/she has ordered. Consequently, the order management system can free the customer of the need to inquire a waitperson about the preparation status of a menu and can prevent the waitperson from being distracted by such inquiries and delaying other tasks.

It is preferable that the server includes: a menu reception information storage means for, based on selection and transmission operations from the user terminal having received the preparation completion information, storing reception information of a menu received by a user of said user terminal; and a menu reception information transmission means for transmitting the reception information stored in the menu reception information storage means to the kitchen terminal. This allows quick and correct detection of wrong delivery, for example a delivery of a menu to a customer not having ordered the menu.

It is preferable that the server includes a menu evaluation information registration means for, based on selection and transmission operations from the user terminal having received the preparation completion information, registering evaluation information for the menu received by a user of said user terminal in association with the restaurant information. This allows acquisition of an evaluation by the customer having actually received the menu and improvement of credibility of evaluation.

It is preferable that the order reception information transmission means displays the order information included in the order reception information, in association with the wireless communication terminal information included in said order reception information, on the corresponding kitchen terminal in a chronological order. This allows the kitchen staff to easily and correctly understand order of preparation of menus.

It is preferable that the restaurant information registration means registers seat information of a restaurant as the restaurant information, and that the wireless communication terminal information registration means registers the wireless communication terminal information in association with the seat information. This allows restaurant staff to easily and infallibly find a seat of a customer having ordered a menu, to increase efficiency of delivery of the menu, while drastically reducing a risk of wrong delivery, etc.

It is preferable that the server includes an order reception number transmission means for transmitting an order reception number associated with the order reception information stored in the order reception information storage means to the user terminal having transmitted said order reception information. This allows a customer to confirm a menu that he/she has ordered based on the order reception number.

It is preferable that the server communicates with a waitperson terminal across a third network; the restaurant information registration means registers, as the restaurant information, waitperson terminal information including waitperson terminal identification data; and the preparation completion information transmission means transmits the preparation completion information to the waitperson terminal. This allows a waitperson to understand a preparation status of menus in the kitchen without going to a particular place such as a kitchen, and to efficiently deliver menus according to the preparation status of menus. In addition, such a configuration allows a waitperson to smoothly respond to inquiries from customers about the preparation status of menus.

It is preferable that the server includes a waitperson selection means for having a specific waitperson terminal selected on the user terminal to thereby select a waitperson to be in charge of a user of said user terminal. This allows easy selection of a waitperson to be in charge preferentially or exclusively.

It is preferable that the preparation completion information transmission means displays on the waitperson terminal the preparation completion information in association with the waitperson terminal information of the waitperson terminal selected by the waitperson selection means. This allows a waitperson to correctly understand preparation statuses of menus in the kitchen for the customer of whom he/she is in charge via the waitperson terminal, and to arrange delivery of the menus more efficiently.

It is preferable that the server includes: a waitperson evaluation reception means for receiving an evaluation of a waitperson selected by the waitperson selection means from the user terminal having selected said waitperson; and a waitperson evaluation registration means for registering the evaluation, which is received by the waitperson evaluation reception means, in association with the restaurant information. As a result, more correct evaluation can be obtained from the customers actually served by the waitperson, and waitperson's awareness of service can be improved.

It is preferable that the server includes a vacant seat information transmission means for transmitting vacant seat information to the waitperson terminal. This allows correct guiding of customers to seats based on vacancy status.

It is preferable that the server includes a checkout means for checking out based on an operation on the user terminal. This allows easy and infallible checkout for each customer.

It is preferable that the server includes a multilingual display means. This can prevent inconvenience to customers such as a menu in an incomprehensible language and can prevent a waitperson from being busy explaining a menu etc.

In addition, an order management method according to the present invention having been made for solving the above described problem is
an order management method employing a server that communicates with a user terminal, which is capable of wireless communication with a wireless communication terminal, across a first network and with a kitchen terminal across a second network,
in which the server includes:
a user information registration step of registering user information including user identification data of the user terminal;
a restaurant information registration step of registering restaurant information including restaurant identification data, kitchen terminal identification data, and menu information;
a wireless communication terminal information registration step of registering wireless communication terminal information including wireless communication terminal identification data in association with the restaurant information;
a visit information storage step of storing visit information, which includes the wireless communication terminal identification data received by the user terminal via wireless communication and the user identification data of the user terminal, the visit information being transmitted from said user terminal;
a menu information transmission step of transmitting corresponding menu information to the user terminal having transmitted the visit information;
an order receipt information storage step of storing order receipt information including order information, which is selected by a user based on the menu information transmitted to the user terminal and transmitted from the user terminal, and the visit information; and
an order receipt information transmission step of transmitting at least the order information among the order receipt information and the wireless communication terminal information to a corresponding kitchen terminal.

The order management method transmits the menu information to the user terminal based on wireless communication between the wireless communication terminal and the user terminal. The customer can voluntarily look at the menu information displayed on his/her own user terminal. Consequently, according to the order management method, for example even in the case of a large number of customers being seated at a table, each person can display the menu information on his/her own user terminal and can look at the menu information simultaneously. In addition, in the order management method, the server receives the order information regarding a menu, among the menu information displayed on the user terminal, selected by a user of said user terminal and transmits the order information to the kitchen terminal, to thereby eliminate the need to call a waitperson for placing an order and allow efficient placement of order as is necessary for each person.

Furthermore, a program according to the present invention having been made for solving the above described problem is
a program for making a computer execute an order management method employing a server that communicates with a user terminal, which is capable of wireless communication with a wireless communication terminal, across a first network and with a kitchen terminal across a second network,
in which the program makes the server function as:
a user information registration means for registering user information including user identification data of the user terminal;
a restaurant information registration means for registering restaurant information including restaurant identification data, kitchen terminal identification data, and menu information;
a wireless communication terminal information registration means for registering wireless communication terminal information including wireless communication terminal identification data in association with the restaurant information;
a visit information storage means for storing visit information, which includes the wireless communication terminal identification data received by the user terminal via wireless communication and the user identification data of the user terminal, the visit information being transmitted from said user terminal;
a menu information transmission means for transmitting corresponding menu information to the user terminal having transmitted the visit information;
an order receipt information storage means for storing order receipt information including order information, which is selected by a user based on the menu information transmitted to the user terminal and transmitted from the user terminal, and the visit information; and
an order receipt information transmission means for transmitting at least the order information among the order receipt information and the wireless communication terminal information to a corresponding kitchen terminal.

The program transmits the menu information to the user terminal based on wireless communication between the wireless communication terminal and the user terminal. The customer can voluntarily look at the menu information displayed on his/her own user terminal. Consequently, according to the program, for example even in the case of a large number of customers being seated at a table, each person can display the menu information on his/her own user terminal and can look at the menu information simultaneously. In addition, in the program, the server receives the order information regarding a menu, among the menu information displayed on the user terminal, selected by a user of said user terminal and transmits the order information to the kitchen terminal, to thereby eliminate the need to call a waitperson for placing an order and allow efficient placement of order as is necessary for each person.

### [EFFECTS OF THE INVENTION]

As described above, the order management system, the order management method, and the program according to the present invention can eliminate the need to call a waitperson and can allow efficient placement of order as is necessary for each person.

### [BRIEF DESCRIPTION OF THE DRAWINGS]

FIG. 1 is a schematic block diagram illustrating an order management system according to an embodiment of the present invention;
FIG. 2 is a sequence diagram showing operation steps of the order management system of FIG. 1;
FIG. 3 is a diagram illustrating an example of an approaching screen of the order management system of FIG. 1;
FIG. 4 is a diagram illustrating an example of a login screen of the order management system of FIG. 1;
FIG. 5 is a diagram illustrating an example of a restaurant menu screen of the order management system of FIG. 1;
FIG. 6 is a diagram illustrating an example of a language selection screen of the order management system of FIG. 1;
FIG. 7 is a diagram illustrating an example of an order timeline screen of the order management system of FIG. 1;
FIG. 8 is a diagram illustrating an example of an order history screen of the order management system of FIG. 1;
FIG. 9 is a schematic block diagram illustrating an order management system according to an embodiment different from the order management system of FIG. 1;
FIG. 10 is a sequence diagram showing operation steps of the order management system of FIG. 9;
FIG. 11 is a diagram illustrating an example of a restaurant menu screen of the order management system of FIG. 9;
FIG. 12 is a diagram illustrating an example of a waitperson screen of the order management system of FIG. 9;
FIG. 13 is a diagram illustrating an example of a waitperson registration screen of the order management system of FIG. 9;
FIG. 14 is a diagram illustrating an example of a table information screen of the order management system of FIG. 9;
FIG. 15 is a schematic block diagram illustrating an order management system according to an embodiment different from the order management systems of FIGS. 1 and 9; and
FIG. 16 is a sequence diagram showing operation steps of the order management system of FIG. 15.

### [DESCRIPTION OF EMBODIMENTS]

Embodiments of the present invention will be described in detail hereinafter with reference to the drawings as necessary.

### First Embodiment

### Order Management System

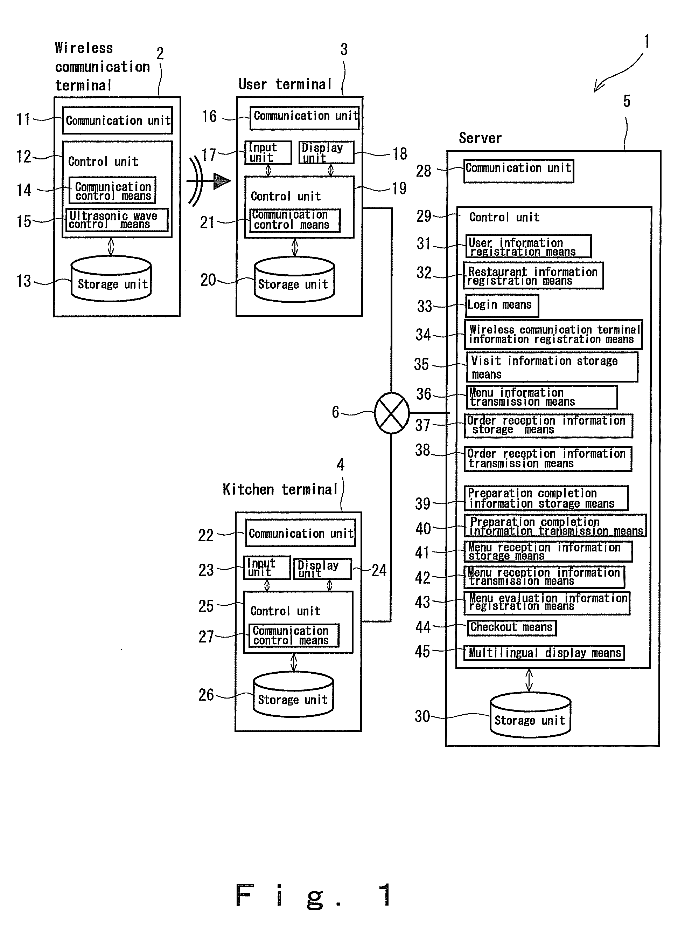

An order management system 1 of FIG. 1 includes a wireless communication terminal 2, a user terminal 3, a kitchen terminal 4, a server 5, and a communication network 6. In the order management system 1, there are actually a plurality of wireless communication terminals 2, a plurality of user terminals 3, and a plurality of kitchen terminals 4. However, in FIG. 1, only one is explained for respective members for the sake of simplicity.

### Wireless Communication Terminal

The wireless communication terminal 2 has a communication unit 11, a control unit 12, and a storage unit 13. The wireless communication terminal 2 is configured as an ultrasonic transmission device that can wirelessly communicate with the user terminal 3 by transmitting an ultrasonic signal to the user terminal 3. In addition, the wireless communication terminal 2 is configured to be able to communicate with the kitchen terminal 4 etc. The wireless communication terminal 2 is installed at each seat in the restaurant.

The communication unit 11 has a speaker and a microphone. The communication unit 11 transmits the ultrasonic signal from the speaker to the user terminal 3. The communication unit 11 receives the ultrasonic signal by the microphone. The communication unit 11 further has an antenna. The communication unit 11 communicates with the kitchen terminal 4, etc. via the antenna.

The control unit 12 includes an arithmetic processing unit. The control unit 12 has a communication control means 14 and an ultrasonic wave control means 15.

The communication control means 14 controls ultrasonic communication with the user terminal 3. The communication control means 14 also controls communication with the kitchen terminal 4, etc.

The ultrasonic wave control means 15 controls output and travelling direction of the ultrasonic wave transmitted from the wireless communication terminal 2. The ultrasonic wave control means 15 controls the output and traveling direction of the ultrasonic wave such that, for example, the ultrasonic wave can be transmitted to almost the entire range of a seat where the wireless communication terminal 2 is installed. It should be noted that even in such a case of controlling the output and traveling direction of the ultrasonic wave such that the ultrasonic wave can be transmitted to almost the entire range of a seat where the wireless communication terminal 2 is installed, the ultrasonic signal can be prevented from leaking to other seats for example by dividing seats by walls, partitions, etc.

The storage unit 13 stores an operation program executed by the control unit 12, data required for processing of the operation program, etc.

### User Terminal

The user terminal 3 has a communication unit 16, an input unit 17, a display unit 18, a control unit 19, and a storage unit 20. The user terminal 3 is configured to be able to wirelessly communicate with the wireless communication terminal 2. The user terminal 3 is configured to be able to communicate with the server 5 across a first network.

The communication unit 16 has an antenna. The communication unit 16 communicates with the server 5 across a network via the antenna. The communication unit 16 also has a speaker and a microphone. The communication unit 16 receives the ultrasonic signal transmitted from the wireless communication terminal 2 by the microphone.

The input unit 17 has an input means such as various buttons e.g., push buttons and cursor keys, and a touch screen. The input unit 17 receives an input from a user having the user terminal 3 (also referred to as "a user of the user terminal 3") and notifies the control unit 19 of an operation signal according to content of the input.

The display unit 18 is configured to include display elements such as liquid crystal etc. The display unit 18 displays character information, video and image information, and various information regarding operation, behavior, etc.

The control unit 19 includes an arithmetic processing unit. The control unit 19 has a communication control means 21.

The communication control means 21 controls wireless communication with the wireless communication terminal 2. The communication control means 21 also controls communication with the server 5 across a network. The communication control means 21 controls wireless communication with the wireless communication terminal 2 and communication with the server 5 across a network by employing an application program installed in the user terminal 3.

The storage unit 20 stores an operation program executed by the control unit 19 and data required for processing of the operation program, etc. The storage unit 20 stores an application program installed in the user terminal 3.

### Kitchen Terminal

The kitchen terminal 4 has a communication unit 22, an input unit 23, a display unit 24, a control unit 25, and a storage unit 26. The kitchen terminal 4 is configured to be able to communicate with the server 5 across a second network.

The communication unit 22 has an antenna. The communication unit 22 communicates with the server 5 via the antenna across a network.

The input unit 23 has an input means such as various buttons e.g., push buttons and cursor keys, and a touch screen. The input unit 23 receives an input from a user having the kitchen terminal 4 (also referred to as "a user of the user terminal 4") and notifies the control unit 25 of an operation signal according to content of the input.

The display unit 24 is configured to include display elements such as liquid crystal etc. The display unit 24 displays character information, video and image information, and various information regarding operation, behavior, etc.

The control unit 25 includes an arithmetic processing unit. The control unit 25 has a communication control means 27.

The communication control means 27 controls communication with the server 5 across a network. The communication control means 27 controls communication with the server 5 across a network by employing an application program installed in the kitchen terminal 4.

The storage unit 26 stores an operation program executed by the control unit 25 and data required for processing of the operation program, etc. The storage unit 26 stores an application program installed in the kitchen terminal 4.

### Server

The server 5 has a communication unit 28, a control unit 29, and a storage unit 30. The server 5 is configured to be able to communicate with the user terminal 3 across the first network. The server 5 is also configured to be able to communicate with the kitchen terminal 4 across the second network. The server 5 can be composed of either one computer or a plurality of computers. The server 5 can be provided with a predetermined input device etc.

The communication unit 28 communicates with the user terminal 3 across the first network. The communication unit 28 also communicates with the kitchen terminal 4 across the second network.

The control unit 29 includes an arithmetic processing unit. The control unit 29 includes a user information registration means 31, a restaurant information registration means 32, a login means 33, a wireless communication terminal information registration means 34, a visit information storage means 35, a menu information transmission means 36, an order reception information storage means 37, an order reception information transmission means 38, a preparation completion information storage means 39, a preparation completion information transmission means 40, a menu reception information storage means 41, a menu reception information transmission means 42, a menu evaluation information registration means 43, a checkout means 44, and a multilingual display means 45.

The user information registration means 31 registers user information including user identification data of the user terminal 3. More specifically, when an application program installed in the user terminal 3 is started, the user information registration means 31 displays a user registration screen (not illustrated) on the user terminal 3. The user information registration means 31 receives from the user terminal 3 the user identification data of the user terminal 3 and information transmitted based on an input and transmission operation on the user registration screen (name, address, birthday, telephone number, e-mail address, credit card information, ID number, password, etc. of the user) and then registers these types of information in association with each other, as user information, to the storage unit 30.

The restaurant information registration means 32 registers restaurant information including restaurant identification data, kitchen terminal identification data, and menu information. More specifically, when an application program installed in the restaurant terminal (the kitchen terminal 4 or other terminals; the same applies hereafter) is started, the restaurant information registration means 32 displays a restaurant information registration screen (not illustrated) on the restaurant terminal. The restaurant information registration means 32 receives from the restaurant terminal the restaurant identification data for uniquely identifying a restaurant, kitchen terminal information including kitchen terminal identification data (ID number, password, etc.) and menu information transmitted based on an input and transmission operation on the restaurant information registration screen (menu name, price, description of menu, category of menu, picture of menu, description of ingredient (including allergen description), halal description, etc.), and then registers these types of information in association with each other, as restaurant information, to the storage unit 30. It should be noted that, for example in the case of using the kitchen terminal 4 as the restaurant terminal, the kitchen terminal identification data can be used as the restaurant identification data. In addition, for example in the case of the restaurant terminal being separate from the kitchen terminal 4, the restaurant information registration means 32 can receive the restaurant information other than the kitchen terminal information from the restaurant terminal, and the kitchen terminal information from the kitchen terminal 4 separately. Furthermore, in this case, the kitchen terminal information can be associated with other restaurant information when the kitchen terminal information is received from the kitchen terminal 4. The restaurant information can include various information, for example, picture, address, map, telephone number, etc. of the restaurant. The restaurant information registration means 32 can further register seat information of the restaurant as the restaurant information. As a method of registering the seat information of the restaurant, a method of registering each seat with a unique seat number assigned thereto can be exemplified.

The login means 33 performs login processing of a user of the user terminal 3 based on a request from the user terminal 3. More specifically, when the application program installed in the user terminal 3 is started, the login means 33 displays a login screen on the user terminal 3. And then, when the user information (ID number, password, etc.) is transmitted through the login screen, the login means 33 checks the user information against the user information registered in the storage unit 30 by the user information registration means 31 and authorizes the user of the user terminal 3 to log in.

The login means 33 also performs login processing of a user of the kitchen terminal 4 based on a request from the kitchen terminal 4. More specifically, when the application program installed in the kitchen terminal 4 is started, the login means 33 displays a login screen on the kitchen terminal 4. And then, when the kitchen terminal information (ID number, password, etc.) is transmitted through the login screen, the login means 33 checks the kitchen terminal information against the kitchen terminal information registered in the storage unit 30 by the restaurant information registration means 32 and authorizes the user of the kitchen terminal 4 to log in.

It should be noted that, in a case in which there is a restaurant terminal separate from the kitchen terminal 4, the login means 33 also performs login processing of a user having the restaurant terminal (also referred to as "a user of the restaurant terminal") based on a request from the restaurant terminal. A login method for the user of the restaurant terminal can be the same as that for a user of the kitchen terminal 4. In addition, when the login means 33 authorizes a user of the user terminal 3, a user of the kitchen terminal 4, or a user of the restaurant terminal to log in, it is not necessarily required to check the ID number and the password, and login authorization can be done without the check of these. Furthermore, for example the login processing of a user of the user terminal 3 can take place after the wireless communication between the user terminal 3 and the wireless communication terminal 2. It should be noted that, in the present embodiment, for example the communication between the user terminal 3 and the server 5 does not necessarily involve the login processing for the user of the user terminal 3 and can take place without the whole login processing. In addition, given the login processing for the user of the user terminal 3 having been performed, logout processing can be configured to take place when checkout processing is performed by the checkout means 44 or when a predetermined period of time has elapsed.

The wireless communication terminal information registration means 34 registers wireless communication terminal information including wireless communication terminal identification data in association with the restaurant information. More specifically, when restaurant identification data of the restaurant terminal and the wireless communication terminal identification data of the wireless communication terminal 2 are received from the restaurant terminal based on the communication between the restaurant terminal such as the kitchen terminal 4 and the wireless communication terminal 2, the wireless communication terminal information registration means 34 registers the wireless communication identification data of the wireless communication terminal 2 to the storage unit 30, in association with the restaurant identification data of the restaurant terminal. In addition, in a case in which the restaurant information registration means 32 has registered the seat information as the restaurant information, the wireless communication terminal information registration means 34 registers the wireless communication terminal identification data of the wireless communication terminal 2 in association with seat information of a seat where the wireless communication terminal 2 is installed. It should be noted that the wireless communication terminal registration means 34 does not necessarily registers the wireless communication terminal information including the wireless communication terminal identification data based on the communication between the restaurant terminal and the wireless communication terminal 2, and can also registers based on, for example, the communication between the wireless communication terminal 2 and the server 5.

The visit information storage means 35 stores visit information transmitted from the user terminal 3. The visit information includes the wireless communication terminal identification data and the user identification data of the user terminal 3 that the user terminal 3 has received by wireless communication. More specifically, for example, when a user of the user terminal 3 visit a restaurant and is guided to a seat, the user starts an application program installed on the user terminal 3, goes through the login processing, and wirelessly communicate with the wireless communication terminal 2. In particular, the user of the user terminal 3 starts the application program installed on the user terminal 3, goes through the login processing, and presses a receive button (not illustrated) for establishing wireless communication with the wireless communication terminal 2. The wireless communication terminal identification data of the wireless communication terminal 2 is thus transmitted to the user terminal 3. And then, the user terminal 3 transmits the wireless communication terminal identification data received from the wireless communication terminal 2 and the user identification data of the user terminal 3 in association with each other, as the visit information, to the server 5. The visit information storage means 35 receives the visit information transmitted from the user terminal 3 and stores to the storage unit 30. It should be noted that the login processing of the user of the user terminal 3 does not necessarily take place prior to the wireless communication with the wireless communication terminal 2, and can also be triggered by the wireless communication with the wireless communication terminal 2, for example. Alternatively, the login processing of the user of the user terminal 3 can be omitted.

The menu information transmission means 36 transmits corresponding menu information to the user terminal having submitted the visit information. As used herein, "corresponding menu information" indicates menu information corresponding to the wireless communication terminal identification data stored in the visit information storage means 35. For example, the menu information transmission means 36 transmits menu information, which is associated with the wireless communication terminal identification data of the wireless communication terminal 2 stored in the visit information storage means 35 by the wireless communication terminal information registration means 34, to the user terminal 3 having the user terminal identification data stored in the visit information storage means 35.

The order reception information storage means 37 stores order reception information including: order information selected by the user based on the menu information, which has been transmitted to the user terminal 3, and transmitted from the user terminal 3; and the visit information. More specifically, the order reception information storage means 37 stores the order reception information including: the order information selected by the user based on the menu information, which has been transmitted to the menu information transmission means 36 and displayed on the user terminal 3, and transmitted from the user terminal 3; and the visit information stored in the visit information storage means 35, to the storage unit 30. The order information stored by the order reception information storage means 37 includes, for example, a menu name and quantity.

The order reception information transmission means 38 transmits at least the order information and the wireless communication terminal information, among the order reception information, to the corresponding kitchen terminal 4. More specifically, the order reception information transmission means 38 transmits at least the order information and the wireless communication terminal information, among the order reception information stored by the order reception information storage means 37, to the kitchen terminal 4 of which kitchen terminal identification data has been registered by the restaurant information registration means 32.

In addition, the order reception information transmission means 38 transmits at least the order information, among the order reception information stored by the order reception information storage means 37, to the user terminal 3 having transmitted the order information.

Furthermore, the order reception information transmission means 38 displays the order information included in the order reception information, in association with the wireless communication terminal information included in the order reception information, on the display unit 24 of the kitchen terminal 4 of which kitchen terminal identification data has been registered by the restaurant information registration means 32, in a chronological order.

The preparation completion information storage means 39 stores preparation completion information transmitted from the kitchen terminal 4 according to the order reception information. More specifically, the kitchen terminal 4 receives the order information and the wireless communication terminal information from the order receipt information transmission means 38 and then displays these types of information on the display unit 24. The user of the kitchen terminal 4 prepares menus based on the order information and the wireless communication terminal information displayed on the display unit 24, and upon completion of preparation, inputs preparation completion information through the input unit 23. Subsequent to transmission of the preparation completion information based on the input and transmission operations on the kitchen terminal 4, the preparation completion information storage means 39 receives the preparation completion information and stores to the storage unit 30.

The preparation completion information transmission means 40 transmits the preparation completion information to the kitchen terminal 4 and to the user terminal 3 having transmitted the order reception information. More specifically, the preparation completion information transmission means 40 transmits the preparation completion information stored by the preparation completion information storage means 39 to the kitchen terminal 4 and the user terminal 3 of which visit information is stored by the order reception information storage means 37. It should be noted that, in the case of a plurality of pieces of kitchen terminal identification data being registered as the restaurant information, the preparation completion information transmission means 40 can also transmit the preparation completion information to the plurality of kitchen terminals 4 of which kitchen terminal identification data has been registered.

The menu reception information storage means 41, based on the selection and transmission operations on the user terminal 3 having received the preparation completion information, stores the reception information of a menu received by the user of the user terminal 3. More specifically, the user terminal 3 receives the preparation completion information from the preparation completion information transmission means 40 and then displays the preparation completion information on the display unit 18. The user of the user terminal 3 actually receives a menu, which is displayed on the display unit 18 as a prepared item, from a waitperson and inputs the menu reception information, which indicates reception of the menu, through the input unit 17. Once the menu reception information is input and a transmission operation is performed by the user of the user terminal 3, the user terminal 3 transmits the menu reception information to the serves 5. The menu reception information storage means 41 receives the menu reception information transmitted from the user terminal 3 and stores the menu reception information to the storage unit 30.

The menu reception information transmission means 42 transmits the menu reception information stored by the menu reception information storage means 41 to the kitchen terminal 4. The menu reception information transmission means 42 transmits, for example, the menu reception information stored by the menu reception information storage means 41 to the kitchen terminal 4 to which preparation completion information has been transmitted by the preparation completion information transmission means 40. Furthermore, the menu reception information transmission means 42 transmits the menu reception information stored by the menu reception information storage means 41 also to the user terminal 3 having transmitted the menu reception information.

The menu evaluation information registration means 43, based on the selection and transmission operations on the user terminal 3 having received the preparation completion information, registers evaluation information of the menu received by the user of the user terminal 3 in association with the restaurant information. More specifically, the menu evaluation information registration means 43 displays an evaluation accepting screen for accepting evaluation information for a menu displayed as a prepared item, on the display unit 18 of the user terminal 3 to which the preparation completion information has been transmitted from the preparation completion information transmission means 40. Once the evaluation for the menu is transmitted from the user terminal 3 based on input and transmission operations on the evaluation accepting screen, the menu evaluation information registration means 43 registers the evaluation for the menu as menu evaluation information in association with the menu information registered by the restaurant information registration means 32. It should be noted that the menu evaluation information registered by the menu evaluation information registration means 43 is transmitted by the menu information transmission means 36 to the user terminal 3 and referred to upon selection of a menu.

The checkout means 44 performs checkout based on an operation on the user terminal 3. More specifically, the checkout means 44 displays checkout information based on the order reception information stored by the order reception information storage means 37 on the display unit 18 of the user terminal 3, and has checkout processing corresponding to the checkout information done based on the input and transmission operations on the user terminal 3. It should be noted that the checkout means 44 does not necessarily display the checkout information based on the order reception information stored by the order reception information storage means 37, and can also display checkout information based on preparation management information transmitted to the preparation completion information transmission means 40, or based on the menu reception information stored by the menu reception information storage means 41.

The multilingual display means 45 displays on the user terminal 3 information in a language selected on the user terminal 3.

The storage unit 30 stores an operation program executed by the control unit 29, data required for processing of the operation program, etc. The storage unit 30 further stores various data registered by the user information registration means 31, the restaurant information registration means 32, the wireless communication terminal information registration means 34, etc.

### Communication Network

The communication network 6 is typically internet. The communication network 6 is configured to be able to connect the user terminal 3 with the server 5 across the first network. The communication network 6 is also configured to be able to connect the kitchen terminal 4 with the server 5 across the second network. The communication network 6 can connect the user terminal 3 with the server 5, and/or the kitchen terminal 4 with the server 5 either directly or via a mobile communications network server (not illustrated). In addition, the first network and the second network can be either the same network or different networks.

### Operation Procedure

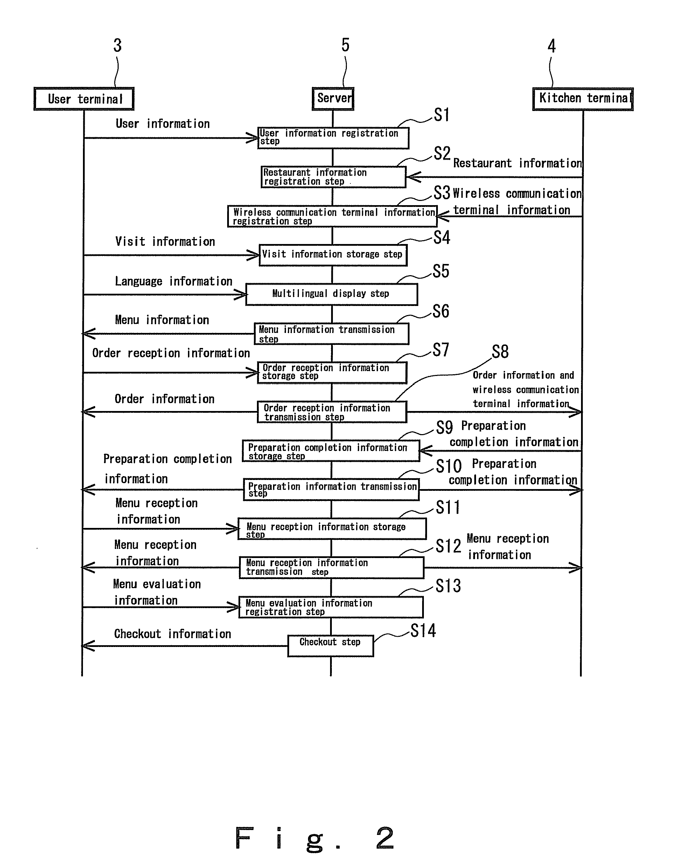

Next, the operation procedure of the order management system 1 is described hereinafter with reference to FIG. 2.

A user information registration step (S1) is a step of registering user information including user identification data of the user terminal 3. S1 is performed by the user information registration means 31. In S1, when an application program installed in the user terminal 3 is started, a user registration screen (not illustrated) is displayed on the user terminal 3. In S1, the user identification data of the user terminal 3 and information transmitted based on an input and transmission operation on the user registration screen (name, address, birthday, telephone number, e-mail address, credit card information, ID number, password, etc. of the user) are received from the user terminal 3 and then registered in association with each other, as user information, to the storage unit 30.

A restaurant information registration step (S2) is a step of registering restaurant information including restaurant identification data, kitchen terminal identification data, and menu information. S2 is performed by the restaurant information registration means 32. In S2, when an application program installed in the restaurant terminal is started, a restaurant information registration screen (not illustrated) is displayed on the restaurant terminal. In S2, the restaurant identification data for uniquely identifying a restaurant, kitchen terminal information including kitchen terminal identification data (ID number, password, etc.) and menu information transmitted based on an input and transmission operation on the restaurant information registration screen (menu name, price, description of menu, category of menu, picture of menu, description of ingredient (including allergen description), halal description, etc.) are received from the restaurant terminal, and then registered in association with each other, as restaurant information, to the storage unit 30. It should be noted that, for example in the case of using the kitchen terminal 4 as the restaurant terminal, the kitchen terminal identification data can be used as the restaurant identification data. In addition, in S2, for example in the case of the restaurant terminal being separate from the kitchen terminal 4, the restaurant information other than the kitchen terminal information can be received from the restaurant terminal, and the kitchen terminal information can be received from the kitchen terminal 4 separately. Furthermore, in this case, the kitchen terminal information can be associated with other restaurant information when the kitchen terminal information is received from the kitchen terminal 4. The restaurant information can include various information, for example, picture, address, map, telephone number, etc. of the restaurant. Furthermore, in S2, seat information of the restaurant can be registered as the restaurant information. As a method of registering the seat information of the restaurant, a method of registering each seat with a unique seat number assigned thereto can be exemplified.

The wireless communication terminal information registration step (S3) is a step of registering wireless communication terminal information including wireless communication terminal identification data in association with the restaurant information. S3 is performed by the wireless communication terminal information registration means 34. In S3, when restaurant identification data of the restaurant terminal and the wireless communication terminal identification data of the wireless communication terminal 2 are received from the restaurant terminal based on the communication between the restaurant terminal such as the kitchen terminal 4 and the wireless communication terminal 2, the wireless communication identification data of the wireless communication terminal 2 is registered to the storage unit 30 in association with the restaurant identification data of the restaurant terminal. In addition in S3, in a case in which the restaurant information registration means 32 has registered the seat information as the restaurant information in S2, the wireless communication terminal identification data of the wireless communication terminal 2 is registered in association with seat information of a seat where the wireless communication terminal 2 is installed. It should be noted that in S3, the wireless communication terminal information including the wireless communication terminal identification data is not necessarily registered based on the communication between the restaurant terminal and the wireless communication terminal 2, and can also be registered based on, for example, the communication between the wireless communication terminal 2 and the server 5.

A visit information storage step (S4) is a step of storing visit information which: includes the wireless communication terminal identification data that the user terminal 3 has received through wireless communication and the user identification data of the user terminal 3; and is transmitted from the user terminal 3. S4 is performed by the visit information storage means 35. In S4, for example, when a user of the user terminal 3 visit a restaurant and is guided to a seat, the user starts an application program installed on the user terminal 3, goes through the login processing, and wirelessly communicate with the wireless communication terminal 2. In particular, the user of the user terminal 3 starts the application program installed on the user terminal 3, goes through the login processing, and presses a receive button (not illustrated) for establishing wireless communication with the wireless communication terminal 2. The wireless communication terminal identification data of the wireless communication terminal 2 is thus transmitted to the user terminal 3. And then, the user terminal 3 transmits the wireless communication terminal identification data received from the wireless communication terminal 2 and the user identification data of the user terminal 3 in association with each other, as the visit information, to the server 5. In S4, the visit information transmitted from the user terminal 3 is received, and stored to the storage unit 30.

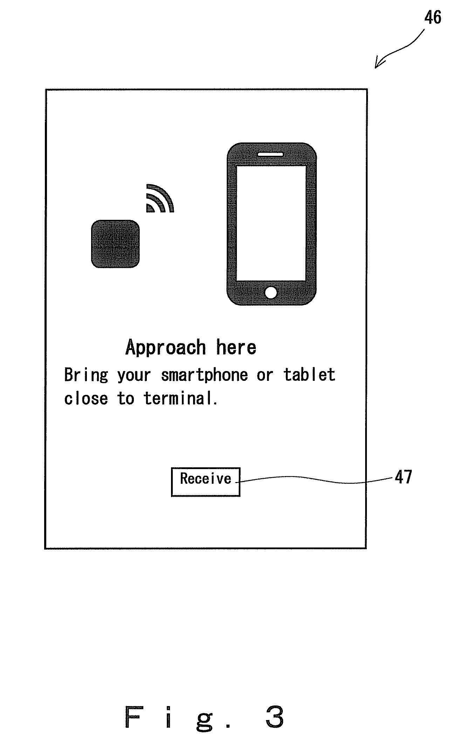

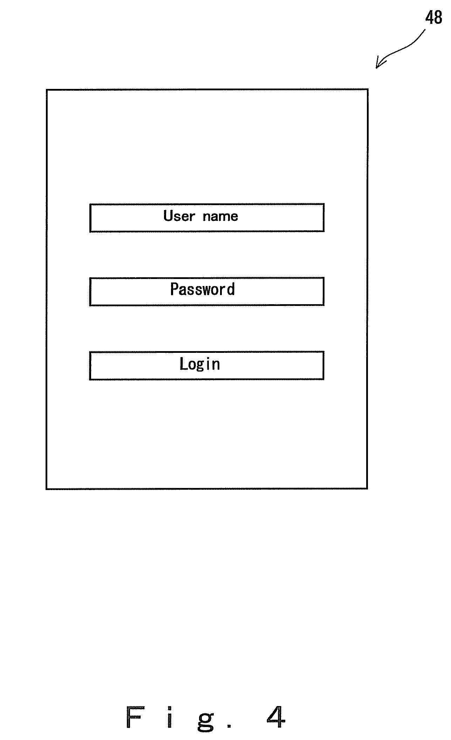

It should be noted that the login processing of the user of the user terminal 3 does not necessarily take place prior to the wireless communication with the wireless communication terminal 2, and can also be triggered by the wireless communication with the wireless communication terminal 2, for example. A login procedure in the case of the login processing triggered by the wireless communication between the user terminal 3 and the wireless communication terminal 2 is described with reference to FIG. 3. An approaching screen 46 of FIG. 3 is a screen displayed on the display unit 18 of the user terminal 3 when the application program installed on the user terminal 3 is started. In response to pressure on a receive button 47 in the approaching screen 46, the user terminal 3 receives the wireless communication terminal identification data of the wireless communication terminal 2. And then, the user terminal 3 accesses to a predetermined URL assigned to the wireless communication terminal identification data thus received, and displays a login screen 48 of FIG. 4 on the display unit 18. On the login screen 48, the user of the user terminal 3 inputs predetermined information (user name (ID number) and password) and presses a login button to log in. Alternatively, in S4, the login processing of the user of the user terminal 3 does not necessarily take place and the login processing can be omitted. In addition, given the login processing having been performed in S4, logout processing can be configured to take place when checkout processing is performed in S14 described later or when a predetermined period of time has elapsed.

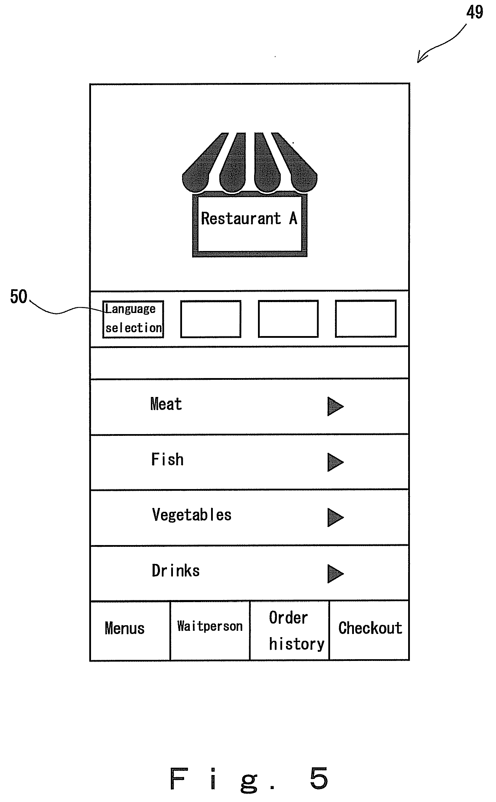

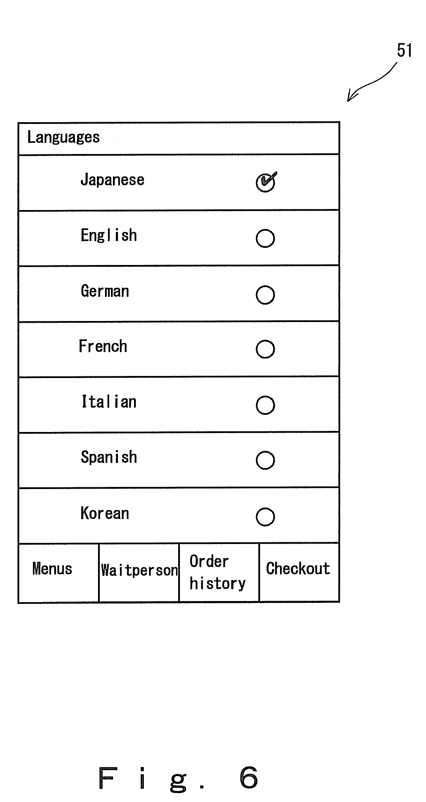

The multilingual display step (S5) is a step of displaying on the user terminal 3 information in a language selected on the user terminal 3. S5 is performed by the multilingual display means 45. More specifically, when the visit information is registered to the server 5 in S4, a restaurant menu screen 49 illustrated in FIG. 5 is displayed on the display unit 18 of the user terminal via a predetermined URL assigned to the wireless communication terminal 2. In addition, a language selection screen 51 of FIG. 6 is a screen displayed in response to pressure on a language selection button 50 on the restaurant menu screen 49. When a desired language is selected on the language selection screen 51 based on an operation on the user terminal 3 and the selected information is transmitted to the server 5, the multilingual display means 45 displays the restaurant information and other predetermined information on the user terminal 3 in the selected language. The languages that are selectable in S5 can be configured for each restaurant, for example by an input in S2.

The menu information transmission step (S6) is a step of transmitting menu information corresponding to the wireless communication terminal identification data stored in S4 to the user terminal 3 having submitted the visit information. S6 is performed by the menu information transmission means 36. In S6, menu information, which is associated by S3 with the wireless communication terminal identification data of the wireless communication terminal 2 stored in S4 is transmitted to the user terminal 3 having the user terminal identification data stored in S4. More specifically, in S6, when a particular menu is selected on the restaurant menu screen 49 of FIG. 5, the menu information corresponding to the selection is transmitted to the user terminal 3.

The order reception information storage step (S7) is a step of storing order reception information including: order information selected by the user of the user terminal 3 based on the menu information, which has been transmitted to the user terminal 3, and transmitted from the user terminal 3; and the visit information. S7 is performed by the order reception information storage means 37. In S7, the order reception information including: the order information selected by the user of the user terminal 3 based on the menu information, which has been transmitted in S6 and displayed on the user terminal 3, and transmitted from the user terminal 3; and the visit information stored in S4, are stored to the storage unit 30. The order information stored in S7 includes, for example, a menu name and quantity.

The order reception information transmission step (S8) is a step of transmitting at least the order information and the wireless communication terminal information, among the order reception information, to the corresponding kitchen terminal 4. S8 is performed by the order reception information transmission means 38. In S8, at least the order information and the wireless communication terminal information, among the order reception information stored in S7, is transmitted to the kitchen terminal 4 of which kitchen terminal identification data has been registered in S2.

In addition, in S8, at least the order information, among the order reception information stored in S7, is transmitted to the user terminal 3 having transmitted the order information.

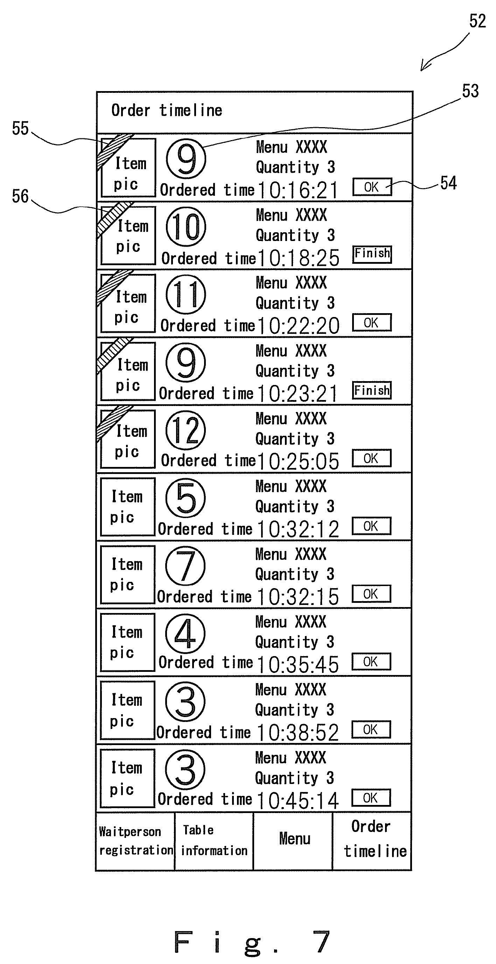

Furthermore, in S8, the order information included in the order reception information is displayed, in association with the wireless communication terminal information included in the order reception information, on the corresponding kitchen terminal 4 in a chronological order. More specifically, in S8, for example an order timeline screen 52 illustrated in FIG. 7 is displayed on the display unit 24 of the kitchen terminal 4. It should be noted that a seat number display portion 53 in the order timeline screen 52 is a portion in which a seat number, which corresponds to the seat information registered in S3 in association with the wireless communication terminal information (wireless communication terminal identification data) included in the order reception information, is displayed. The kitchen terminal 4 can display the order timeline screen 52 in a state in which, for example, the login processing has been done by the login means 33.

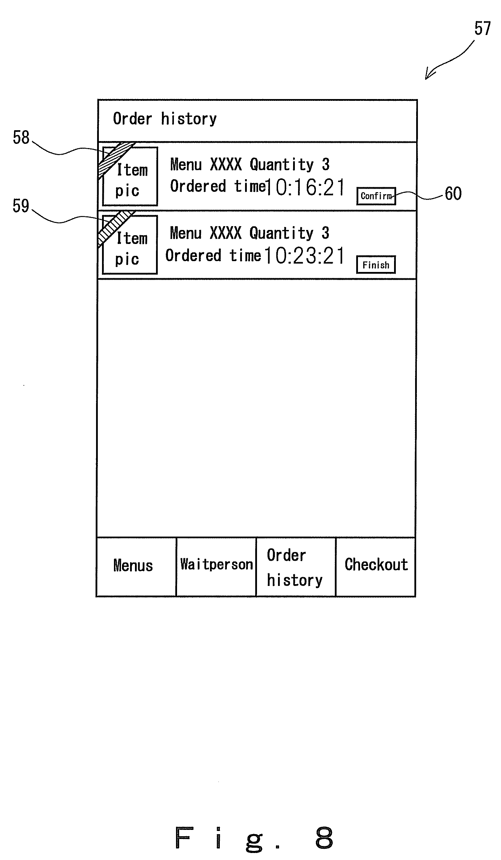

The order information transmitted in S8 to the user terminal 3 is displayed on the display unit 18 of the user terminal 3 as, for example, an order history screen 57 illustrated in FIG. 8.

The preparation completion information storage step (S9) stores preparation completion information transmitted from the kitchen terminal 4 according to the order reception information. S9 is performed by the preparation completion information storage means 39. In S9, the user of the kitchen terminal 4 prepares a menu based on a content of the order timeline screen 52, and upon completion of preparation, presses a finish button 54 corresponding to the prepared menu. S9 receives the preparation completion information transmitted by pressure on the finish button 54, and stores the preparation completion information to the storage unit 30.

The preparation completion information transmission step (S10) is a step of transmitting the preparation completion information to the kitchen terminal 4 and to the user terminal 3 having transmitted the order reception information. S10 is performed by the preparation completion information transmission means 40. S10 transmits the preparation completion information stored in S9 to the kitchen terminal 4 and the user terminal 3 of which visit information is stored in S7. Moreover, in S10, for example when the preparation completion information is stored in S9, completion of preparation is displayed by displaying a preparation completion flag 55 on the upper left of a prepared menu in the order timeline screen 52. Furthermore, in S10, for example when the preparation completion information is stored in S9, completion of preparation is displayed by displaying a preparation completion flag 58 on the upper left of a prepared menu in the order timeline screen 57 displayed on the user terminal 3 having transmitted the order reception information. It should be noted that, in S10, in the case of a plurality of pieces of kitchen terminal identification data being registered as the restaurant information, the preparation completion information can be transmitted to the plurality of kitchen terminals 4 of which kitchen terminal identification data has been registered.

The menu reception information storage step (S11) is a step of, based on the selection and transmission operations on the user terminal 3 having received the preparation completion information, storing the reception information of a menu received by the user of the user terminal 3. S11 is performed by the menu reception information storage means 41. More specifically, in S11, for example the user of the user terminal 3 actually receives from a waitperson etc. the menu for which the preparation completion flag 58 has been displayed on the order history screen 57, and then presses a confirmation button 60. As a result, the menu reception information storage means 41 stores the menu reception information to the storage unit 30.

The menu reception information transmission step (S12) is a step of transmitting the menu reception information stored in S11 to the kitchen terminal 4. S12 is performed by the menu reception information transmission means 42. In S12, for example, the menu reception information stored in S11 is transmitted to the kitchen terminal 4 to which preparation completion information has been transmitted in S10. More specifically, in S12, for example when the menu reception information is stored in S11, reception of the menu by the user of the user terminal 3 is displayed by displaying a menu reception flag 56 on the upper left of the corresponding menu on the order timeline screen 52. Furthermore in S12, when the menu reception information is stored in S11, reception of the menu by the user of the user terminal 3 is displayed by also displaying a menu reception flag 59 on the upper left of the corresponding menu on the order history screen 57. Alternatively in S12, reception of the menu by the user of the user terminal 3 can also be displayed by, for example, deleting the corresponding menu on the order timeline screen 52. In addition, a menu for which the menu reception flag 56 has been displayed in S12 can be deleted from the order timeline screen 52 after the elapse of a predetermined period of time, with reference to subsequent order reception status, for example.

The menu evaluation information registration step (S13) is a step of, based on the selection and transmission operations on the user terminal 3 having received the preparation completion information, registering evaluation information of the menu received by the user of the user terminal 3 in association with the restaurant information. S13 is performed by the menu evaluation information registration means 43. More specifically, in S13, an evaluation accepting screen (not illustrated) for accepting evaluation information for a menu displayed as a prepared item is displayed on the display unit 18 of the user terminal 3 to which the preparation completion information has been transmitted in S10. In S13, once the evaluation for the menu is transmitted from the user terminal 3 based on input and transmission operations on the evaluation accepting screen, the evaluation information for the menu is registered as menu evaluation information in association with the menu information registered in S2. The menu evaluation information registered in S13 is transmitted by the menu information transmission means 36 to the user terminal 3 and referred to upon selection of a menu.

The checkout step (S14) is a step of performing checkout based on an operation on the user terminal 3. S14 is performed by the checkout means 44. In S14, checkout information based on the order reception information stored in S17 is displayed on the display unit 18 of the user terminal 3, and checkout processing corresponding to the checkout information is done based on the input and transmission operations on the user terminal 3. It should be noted that in S14, the checkout information is not necessarily displayed based on the order reception information stored in S7, and can also display checkout information based on preparation management information transmitted in S10, or based on the menu reception information stored in S11.

In the present embodiment, when the checkout is performed in S14, the user of the user terminal 3 is considered to have left the seat.

### Advantages

The order management system 1 transmits the menu information to the user terminal based on wireless communication between the wireless communication terminal 2 and the user terminal 3, and a customer (the user of the user terminal 3) can therefore voluntarily check the menu information displayed on his/her own user terminal (mobile phone, smart phone, tablet terminal etc.). Consequently, according to the order management system 1, for example even in the case of a large number of customers being seated at a table, each person can display the menu information on his/her own user terminal 3 and can look at the menu information independently and simultaneously. In addition, in the order management system 1, the server 5 receives the order information regarding a menu, among the menu information displayed on the user terminal 3, selected by a user of said user terminal 3 and can transmit the order information to the kitchen terminal 4, to thereby eliminate the need to call a waitperson for placing an order and allow efficient placement of order as necessary.

Since, in the order management system 1, the order receipt information transmission means 38 can transmit at least the order information, among the order receipt information, to the user terminal 3 having transmitted said order receipt information, order contents can be displayed to the customer having placed the order.

Since the order management system 1 includes: the preparation completion information storage means 39 for storing preparation completion information transmitted from the kitchen terminal 4 in response to the order receipt information; and the preparation completion information transmission means 40 for transmitting the preparation completion information to the kitchen terminal 4 and to the user terminal 3 having transmitted the order receipt information, kitchen staff can manage a preparation status of the order and the customer can check the preparation status of a menu etc. that he/she has ordered. Consequently, the order management system 1 can free the customer of the need to inquire a waitperson about the preparation status of a menu and can prevent the waitperson from being distracted by such inquiries and delaying other tasks.

Since the order management system 1 includes: the menu reception information storage means 41 for, based on selection and transmission operations from the user terminal 3 having received the preparation completion information, storing reception information of a menu received by a user of said user terminal 3; and the menu reception information transmission means 42 for transmitting the reception information stored in the menu reception information storage means 41 to the kitchen terminal 4, quick and correct detection of wrong delivery, for example a delivery of a menu to a customer not having ordered the menu, is possible.

Since the order management system 1 can, based on selection and transmission operations from the user terminal having received the preparation completion information, register evaluation information for the menu received by a user of said user terminal 3 in association with the restaurant information, an evaluation by the customer having actually received the menu can be acquired and credibility of evaluation can be improved.

Since, in the order management system 1, the order reception information transmission means 38 can display the order information included in the order reception information, in association with the wireless communication terminal information included in said order reception information, on the corresponding kitchen terminal 4 in a chronological order, the kitchen staff can easily and correctly understand order of preparation of menus.

Since, in the order management system 1, the restaurant information registration means 32 registers seat information of a restaurant as the restaurant information, and the wireless communication terminal information registration means 34 can register the wireless communication terminal information in association with the seat information, restaurant staff can easily and infallibly find a seat of a customer having ordered a menu, to increase efficiency of delivery of the menu, while drastically reducing a risk of wrong delivery, etc.

Since the order management system 1 includes the checkout means for checking out based on an operation on the user terminal 3, easy and infallible checkout for each customer is possible. In addition, by checking out based on an operation on the user terminal 3, the order management system 1 can, for example, prevent a credit card from being skimmed by a third party, to thereby improve security of checkout processing.

Since the order management system 1 includes the multilingual display means, inconvenience to customers such as a menu in an incomprehensible language can be prevented and a waitperson can be prevented from being busy explaining a menu etc. In addition, the order management system 1 registers menu name, price, description of menu, category of menu, picture of menu, description of ingredient (including allergen description), halal description, etc. as the menu information, and can display the menu information in a language that the customer can understand, and therefore if a customer cannot eat particular foodstuffs etc. due to allergy or for religious reasons, presence of such foodstuffs can be easily and infallibly checked.

The order management method transmits the menu information to the user terminal based on wireless communication between the wireless communication terminal 2 and the user terminal 3, a customer can therefore voluntarily check the menu information displayed on his/her own user terminal 3. Consequently, according to the order management method, for example even in the case of a large number of customers being seated at a table, each person can display the menu information on his/her own user terminal 3 and can look at the menu information independently and simultaneously. In addition, in the order management method, the server 5 receives the order information regarding a menu, among the menu information displayed on the user terminal 3, selected by a user of said user terminal 3 and can transmit the order information to the kitchen terminal 4, to thereby eliminate the need to call a waitperson for placing an order and allow efficient placement of order as necessary.

The program transmits the menu information to the user terminal 3 based on wireless communication between the wireless communication terminal 2 and the user terminal 3, a customer can therefore voluntarily check the menu information displayed on his/her own user terminal 3. Consequently, according to the program, for example even in the case of a large number of customers being seated at a table, each person can display the menu information on his/her own user terminal 3 and can look at the menu information independently and simultaneously. In addition, in the program, the server 5 receives the order information regarding a menu, among the menu information displayed on the user terminal 3, selected by a user of said user terminal 3 and can transmit the order information to the kitchen terminal 4, to thereby eliminate the need to call a waitperson for placing an order and allow efficient placement of order as necessary.

### Second Embodiment

### Order Management System

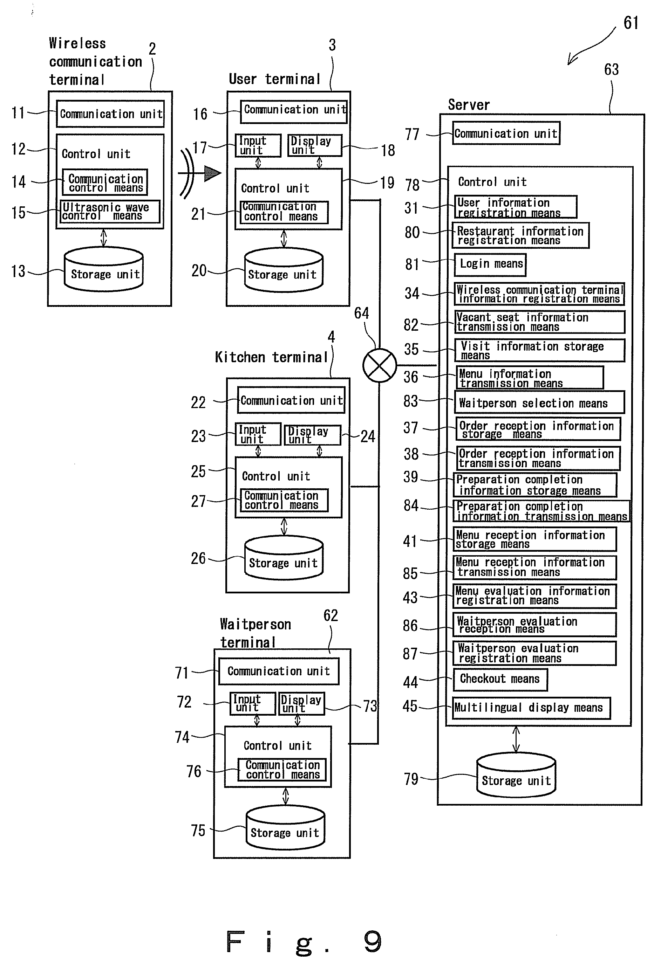

An order management system 61 of FIG. 9 includes the wireless communication terminal 2, the user terminal 3, the kitchen terminal 4, a waitperson terminal 62, a server 63, and a communication network 64. In the order management system 61, there are actually a plurality of wireless communication terminals 2, a plurality of user terminals 3, a plurality of kitchen terminals 4, and a plurality of waitperson terminals 62. However, in FIG. 9, only one is explained for respective members for the sake of simplicity. Configurations similar to those of the order management system 1 of FIG. 1 are referred to by the same numerals and description thereof is omitted.

### Waitperson Terminal

The waitperson terminal 62 has a communication unit 71, an input unit 72, a display unit 73, a control unit 74, and a storage unit 75. The waitperson terminal 62 is configured to be able to communicate with the server 63 across the third network.

The communication unit 71 has an antenna. The communication unit 71 communicates with the server 63 across the network via the antenna.

The input unit 72 has an input means such as various buttons e.g., push buttons and cursor keys, and a touch screen. The input unit 72 receives an input from a user having the waitperson terminal 62 (also referred to as "a user of the waitperson terminal 62") and notifies the control unit 74 of an operation signal according to content of the input.

The display unit 73 is configured to include display elements such as liquid crystal etc. The display unit 73 displays character information, video and image information, and various information regarding operation, behavior, etc.

The control unit 74 includes an arithmetic processing unit. The control unit 74 has a communication control means 76.

The communication control means 76 controls communication with the server 63 across a network. The communication control means 76 controls communication with the server 63 across a network by employing an application program installed in the waitperson terminal 62.

The storage unit 75 stores an operation program executed by the control unit 74 and data required for processing of the operation program, etc. The storage unit 75 stores an application program installed in the waitperson terminal 62.

### Server

The server 63 has a communication unit 77, a control unit 78, and a storage unit 79. The server 63 is configured to be able to communicate with the user terminal 3 across the first network. The server 63 is also configured to be able to communicate with the kitchen terminal 4 across the second network. The server 63 is also configured to be able to communicate with the waitperson terminal 62 across the third network. The server 63 can be composed of either one computer or a plurality of computers. The server 63 can be provided with a predetermined input device etc.

The communication unit 77 communicates with the user terminal 3 across the first network. The communication unit 77 communicates with the kitchen terminal 4 across the second network. The communication unit 77 communicates with the waitperson terminal 62 across the third network.

The control unit 78 includes an arithmetic processing unit. The control unit 78 includes a user information registration means 31, a restaurant information registration means 80, a login means 81, a wireless communication terminal information registration means 34, a vacant seat information transmission means 82, a visit information storage means 35, a menu information transmission means 36, a waitperson selection means 83, an order reception information storage means 37, an order reception information transmission means 38, a preparation completion information storage means 39, a preparation completion information transmission means 84, a menu reception information storage means 41, a menu reception information transmission means 85, a menu evaluation information registration means 43, a waitperson evaluation reception means 86, a waitperson evaluation registration means 87, a checkout means 44, and a multilingual display means 45.

The restaurant information registration means 80 registers restaurant information including restaurant identification data, kitchen terminal identification data, and menu information. In addition, the restaurant information registration means 80 registers, as the restaurant information, waitperson terminal information including waitperson terminal identification data. More specifically, when an application program installed in the restaurant terminal is started, the restaurant information registration means 80 displays a restaurant information registration screen on the restaurant terminal. The restaurant information registration means 80 receives from the restaurant terminal the restaurant identification data for uniquely identifying a restaurant, kitchen terminal information including kitchen terminal identification data (ID number, password, etc.), menu information transmitted based on an input and transmission operation on the restaurant information registration screen (menu name, price, description of menu, category of menu, picture of menu, description of ingredient (including allergen description), halal description, etc.) and waitperson terminal information including waitperson terminal identification data (ID number, password, etc.), and then registers these types of information in association with each other, as restaurant information, to the storage unit 79. It should be noted that, for example in the case of using the kitchen terminal 4 as the restaurant terminal, the kitchen terminal identification data can be used as the restaurant identification data. In addition, for example in the case of the restaurant terminal being separate from the kitchen terminal 4, the restaurant information registration means 80 can receive: the restaurant information other than the kitchen terminal information and the waitperson terminal information from the restaurant terminal; the kitchen terminal information from the kitchen terminal 4; and the waitperson terminal information from the waitperson terminal 62. Furthermore, in this case, the kitchen terminal information can be associated with other restaurant information when the kitchen terminal information is received from the kitchen terminal 4, and the waitperson terminal information can be associated with other restaurant information when the waitperson terminal information is received from the waitperson terminal 62. The restaurant information can include various information, for example, picture, address, map, telephone number, etc. of the restaurant. The restaurant information registration means 80 can further register seat information of the restaurant as the restaurant information. As a method of registering the seat information of the restaurant, a method of registering each seat with a unique seat number assigned thereto can be exemplified.

The login means 81 performs login processing of a user of the user terminal 3 based on a request from the user terminal 3. More specifically, when the application program installed in the user terminal 3 is started, the login means 81 displays a login screen on the user terminal 3. And then, when the user information (ID number, password, etc.) is transmitted through the login screen, the login means 81 checks the user information against the user information registered in the storage unit 79 by the user information registration means 31 and authorizes the user of the user terminal 3 to log in.

The login means 81 also performs login processing of a user of the kitchen terminal 4 based on a request from the kitchen terminal 4. More specifically, when the application program installed in the kitchen terminal 4 is started, the login means 81 displays a login screen on the kitchen terminal 4. And then, when the kitchen terminal information (ID number, password, etc.) is transmitted through the login screen, the login means 81 checks the kitchen terminal information against the kitchen terminal information registered in the storage unit 79 by the restaurant information registration means 80 and authorizes the user of the kitchen terminal 4 to log in.

The login means 81 further performs login processing of a user of the waitperson terminal 62 based on a request from the waitperson terminal 62. More specifically, when the application program installed in the waitperson terminal 62 is started, the login means 81 displays a login screen on the waitperson terminal 62. And then, when the waitperson terminal information (ID number, password, etc.) is transmitted through the login screen, the login means 81 checks the waitperson terminal information against the waitperson terminal information registered in the storage unit 79 by the restaurant information registration means 80 and authorizes the user of the waitperson terminal 62 to log in.

It should be noted that, in a case in which there is a restaurant terminal separate from the kitchen terminal 4, the login means 81 also performs login processing of a user of the restaurant terminal based on a request from the restaurant terminal. A login method for the user of the restaurant terminal can be the same as that for a user of the kitchen terminal 4. In addition, when the login means 81 authorizes a user of the user terminal 3, a user of the kitchen terminal 4, a user of the restaurant terminal, or a user of the waitperson terminal 62 to log in, it is not necessarily required to check the ID number and the password, and login authorization can be done without the check of these. Furthermore, for example the login processing of a user of the user terminal 3 can take place after the wireless communication between the user terminal 3 and the wireless communication terminal 2. It should be noted that, in the present embodiment, for example the communication between the user terminal 3 and the server 63 does not necessarily involve the login processing for the user of the user terminal 3 and can take place without the whole login processing. In addition, given the login processing for the user of the user terminal 3 having been performed, logout processing can be configured to take place when checkout processing is performed by the checkout means 44 or when a predetermined period of time has elapsed.

The vacant seat information transmission means 82 transmits vacant seat information to the waitperson terminal 62. More specifically, the vacant seat information transmission means 82 determines a current occupancy status of seats based on, for example, the wireless communication terminal identification data of the wireless communication terminal 2 stored in the visit information storage means 35. And then, the vacant seat information transmission means 82 determines the vacant seat information from the occupancy status and transmits to the waitperson terminal 62.

The waitperson selection means 83 has the user terminal 3 select a specific waitperson terminal 62, to select a waitperson to be in charge of a user of said user terminal 3. More specifically, the waitperson selection means 83 has the user terminal 3 select a specific waitperson terminal among a plurality of waitperson terminals of which waitperson terminal information is registered by the restaurant information registration means 80, to select a waitperson to be in charge of a user of said user terminal 3. It should be noted that the user of the user terminal 3 does not necessarily select a specific waitperson and can alternatively entrust the selection of waitperson to the restaurant.

The preparation completion information transmission means 84 transmits preparation completion information to the kitchen terminal 4 and to the user terminal 3 having transmitted the order reception information. In addition, the preparation completion information transmission means 84 transmits the preparation completion information to the waitperson terminal 62. More specifically, the preparation completion information transmission means 84 transmits the preparation completion information stored by the preparation completion information storage means 39 to the kitchen terminal 4, to the user terminal 3 of which visit information is stored by the order reception information storage means 37, and to the waitperson terminal 62.

Furthermore, the preparation completion information transmission means 84 displays the preparation completion information and the waitperson terminal information of the waitperson terminal 62 selected by the waitperson selection means 83, in association with each other, on the waitperson terminal 62. More specifically, the preparation completion information transmission means 84 displays the preparation completion information on the waitperson terminal 62 of the waitperson selected by the waitperson selection means 83 such that it is clear that the preparation completion information is for an order from the user of the user terminal 3 having selected the waitperson.

The menu reception information transmission means 85 transmits the reception information stored by the menu reception information storage means 41 to the kitchen terminal 4. The menu reception information transmission means 85 transmits, for example, the menu reception information stored by the menu reception information storage means 41 to the kitchen terminal 4 to which preparation completion information has been transmitted by the preparation completion information transmission means 84. In addition, the menu reception information transmission means 85 also transmits the reception information stored by the menu reception information storage means 41 to the user terminal 3 having transmitted the menu reception information. Furthermore, the menu reception information transmission means 85 transmits the reception information stored by the menu reception information storage means 41 to the waitperson terminal 62.

The waitperson evaluation reception means 86 receives an evaluation for the waitperson selected by the waitperson selection means 83 from the user terminal 3 having selected said waitperson. More specifically, the waitperson evaluation reception means 86 displays, on the display unit 18 of the user terminal 3 having selected the waitperson by the waitperson selection means 83, an evaluation accepting screen for accepting evaluation information for the waitperson. The waitperson evaluation reception means 86 receives the evaluation information for the waitperson transmitted from the user terminal 3 based on the input and transmission operation on the evaluation accepting screen. It should be noted that the waitperson evaluation reception means 86 can also receive the evaluation information for the waitperson selected by the restaurant.

The waitperson evaluation registration means 87 registers the evaluation information received by the waitperson evaluation reception means 86 in association with the restaurant information. More specifically, the waitperson evaluation registration means 87 registers the evaluation information received by the waitperson evaluation reception means 86 in association with the waitperson information registered by the waitperson selection means 83. It should be noted that a procedure in which the waitperson selection means 83 registers the waitperson information will be described later.

The storage unit 79 stores an operation program executed by the control unit 78 and data required for processing of the operation program, etc. The storage unit 79 further stores various data registered by the user information registration means 31, the restaurant information registration means 80, the wireless communication terminal information registration means 34, the menu evaluation information registration means 43, the waitperson evaluation registration means 87, etc.

### Communication Network

The communication network 64 is typically internet. The communication network 64 is configured to be able to connect the user terminal 3 with the server 63 across the first network. The communication network 64 is also configured to be able to connect the kitchen terminal 4 with the server 63 across the second network. The communication network 64 is further configured to be able to connect the waitperson terminal 62 with the server 63 across the third network. The communication network 64 can connect the user terminal 3 with the server 63, the kitchen terminal 4 with the server 63, and the waitperson terminal 62 with the server 63, either directly or via a mobile communications network server (not illustrated). In addition, the first network, the second network, and the third network can be either the same network or different networks.

### Operation Procedure

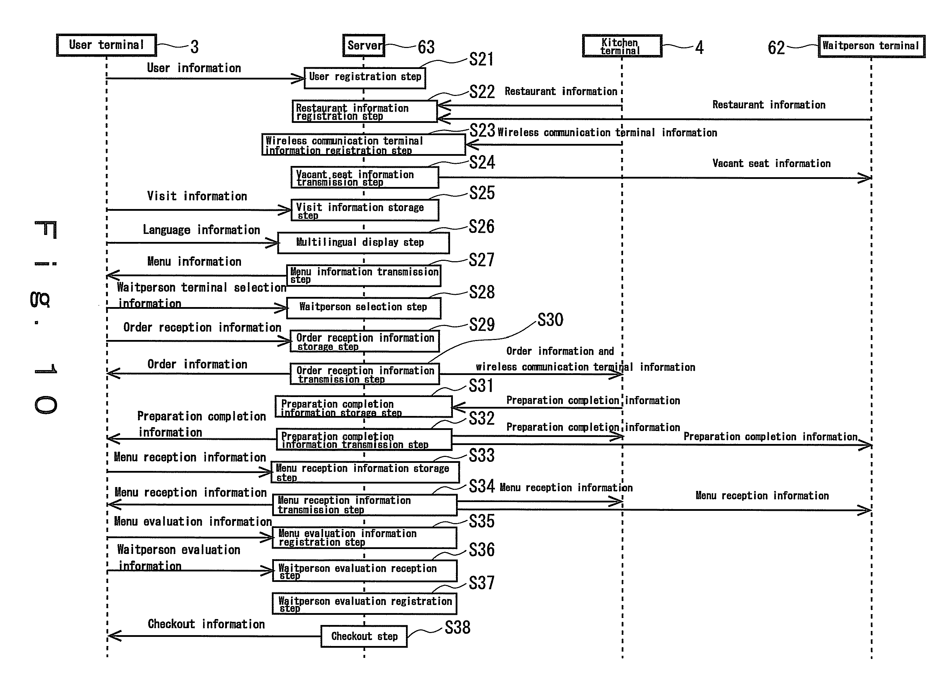

An operation procedure of the order management system 61 is described hereinafter with reference to FIG. 10.

A user information registration step (S21) is a step of registering user information including user identification data of the user terminal 3. S21 is performed by the user information registration means 31. S21 is performed in a similar procedure to S1.

A restaurant information registration step (S22) is a step of registering: restaurant information including restaurant identification data, kitchen terminal identification data, and menu information; and waitperson terminal information including the waitperson terminal identification data. S22 is performed by the restaurant information registration means 80. A registration procedure of the restaurant information including the restaurant identification data, the kitchen terminal identification data, and the menu information is similar to S2. In addition, a registration procedure of the waitperson terminal information including the waitperson terminal identification data can be similar to the registration procedure of the kitchen terminal information including the kitchen terminal identification data.

A wireless communication terminal information registration step (S23) is a step of registering wireless communication terminal information including wireless communication terminal identification data in association with the restaurant information. S23 is performed by the wireless communication terminal information registration means 34. S23 is performed in a similar procedure to S3.

A vacant seat information transmission step (S24) is a step of transmitting the vacant seat information to the waitperson terminal 62. S24 is performed by the vacant seat information transmission means 82. S24 determines a current occupancy status of seats based on, for example, the wireless communication terminal identification data of the wireless communication terminal 2 stored in the visit information storage step (S25) described later. More specifically, in S25, based on wireless communication between the user terminal 3 and the wireless communication terminal 2, the user identification data of the user terminal 3 and the wireless communication identification data of the wireless communication terminal 2 are stored in the storage unit 79 in association with each other. Consequently, S24 determines a seat where the wireless communication terminal 2 of which wireless communication terminal identification data is stored in S25 is installed as a currently occupied seat. And then, S24 determines the vacant seat information from the currently occupied seat and transmits to the waitperson terminal 62. It should be noted that, in S24, for example in the case of the user of the user terminal 3 having performed a checkout step (S38) described later, a seat associated with the user terminal 3 is considered as a vacant seat.

A visit information storage step (S25) is a step of storing visit information which: includes the wireless communication terminal identification data that the user terminal 3 has received through wireless communication and the user identification data of the user terminal 3; and is transmitted from the user terminal 3. S25 is performed by the visit information storage means 35. S25 is performed in a similar procedure to S4.

A multilingual display step (S26) is a step of displaying on the user terminal 3 information in a language selected on the user terminal 3. S26 is performed by the multilingual display means 45. S26 is performed in a similar procedure to S5.

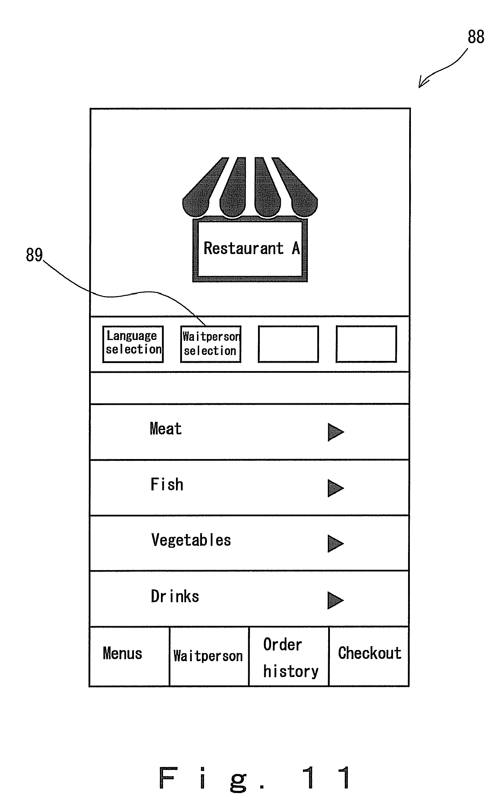

A menu information transmission step (S27) is a step of transmitting menu information corresponding to the wireless communication terminal identification data stored in S25 to the user terminal 3 having submitted the visit information. S27 is performed by the menu information transmission means 36. In S27, menu information, which is associated by S23 with the wireless communication terminal identification data of the wireless communication terminal 2 stored in S25 is transmitted to the user terminal 3 having the user terminal identification data stored in S25. More specifically, S27 displays the restaurant menu screen 88 of FIG. 11 on the display unit 18 of the user terminal 3. And then, when a particular menu is selected on the user terminal 3 through the restaurant menu screen 88, S27 transmits the menu information corresponding to the selection is transmitted to the user terminal 3.

A waitperson selection step (S28) is a step of having the user terminal 3 select a specific waitperson terminal 62, to select a waitperson to be in charge of a user of said user terminal 3. S28 is performed by the waitperson selection means 83. S28 has the user terminal 3 select a specific waitperson terminal among a plurality of waitperson terminals of which waitperson terminal information is registered in S22, to select a waitperson to be in charge of a user of said user terminal 3.

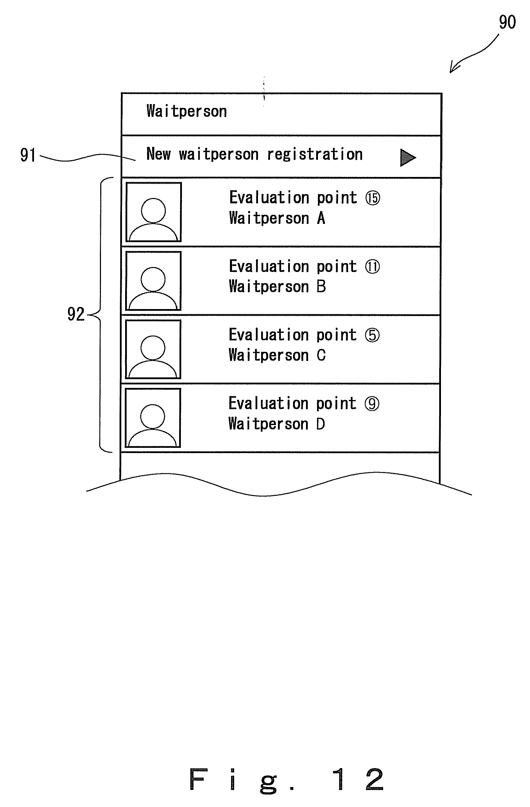

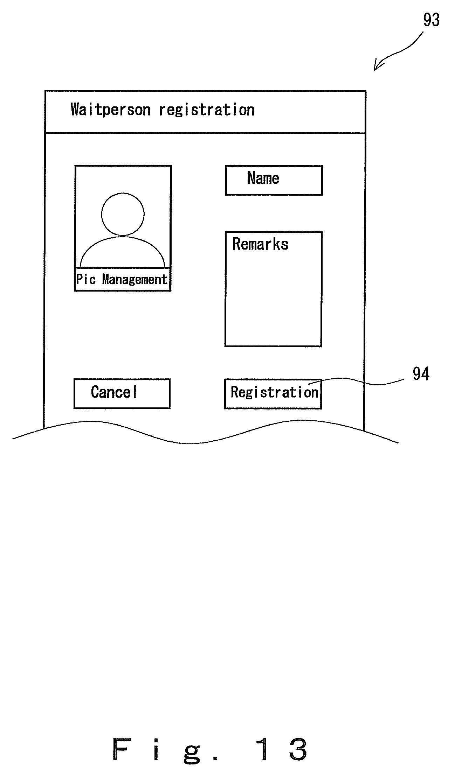

S28 is described hereinafter in detail with reference to FIGS. 11 to 13. The waitperson screen 90 of FIG. 12 is a screen displayed through the restaurant information registration screen displayed in S22. In addition, the waitperson registration screen 93 of FIG. 13 is a screen displayed in response to pressure on a new waitperson registration button 91 on the waitperson screen 90. In S28, when predetermined information is input and the registration button 94 is pressed on the waitperson registration screen 93, the waitperson information is registered as the restaurant information. And then, the waitperson information thus registered is displayed on the waitperson display unit 92. Furthermore, the waitperson information registered in S28 is associated with a specific waitperson terminal 62 by means of a predetermined ID. In S28, the user of the user terminal 3 presses a waitperson selection button 89 on the restaurant menu screen 88 and selects, on a waitperson list screen (not illustrated) thus displayed, a waitperson associated with a specific waitperson terminal, to thereby select a waitperson to be in charge of the user of said user terminal 3. As a result, the waitperson terminal information of the waitperson terminal 62 and the seat information are stored in the storage unit 79 in association with each other. It should be noted that in S28, the user of the user terminal 3 does not necessarily select a specific waitperson, and can alternatively entrust the selection of waitperson to the restaurant without selecting a waitperson in charge. The new waitperson registration is not necessarily performed in S28 and can be alternatively performed in S22, for example.

An order reception information storage step (S29) is a step of storing order reception information including: order information selected by the user based on the menu information, which has been transmitted to the user terminal 3, and transmitted from the user terminal 3; and the visit information. S29 is performed by the order reception information storage means 37. S29 is performed in a similar procedure to S7.

An order reception information transmission step (S30) is a step of transmitting at least the order information and the wireless communication terminal information, among the order reception information, to the corresponding kitchen terminal 4. S30 is performed by the order reception information transmission means 38. S30 is performed in a similar procedure to S8.

A preparation completion information storage step (S31) stores preparation completion information transmitted from the kitchen terminal 4 according to the order reception information. S31 is performed by the preparation completion information storage means 39. S31 is performed in a similar procedure to S9.

A preparation completion information transmission step (S32) is a step of transmitting the preparation completion information to the kitchen terminal 4, to the user terminal 3 having transmitted the order reception information and to the waitperson terminal 62. S32 is performed by the preparation completion information transmission means 84. A procedure for transmitting the preparation completion information to the kitchen terminal 4 and to the user terminal 3 having transmitted the order reception information is similar to S10.

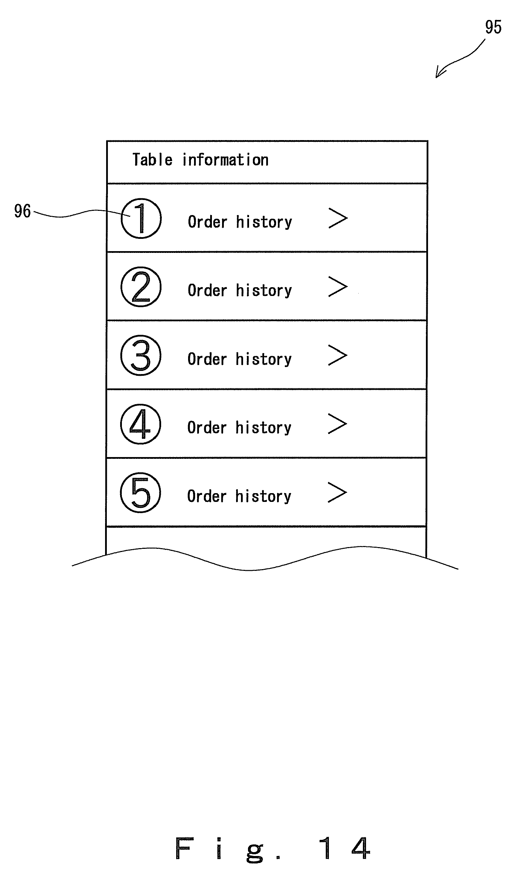

A procedure for transmitting the preparation completion information to the waitperson terminal 62 in S32 is described hereinafter. In S32, the preparation completion information and the waitperson terminal information of the waitperson terminal 62 selected in S28 are displayed on the waitperson terminal 62 in association with each other. More specifically, in S32, a table information screen 95 illustrated in FIG. 14 is displayed on the display unit 73 of the waitperson terminal 62. The table information screen 95 has a seat number display portion 96. The seat number display portion 96 displays a seat number corresponding to seat information associated with the waitperson terminal information of the waitperson terminal 62 selected in S28. And then, when the user of the waitperson terminal 62 selects the seat number on the seat number display portion 96, the preparation completion information of the seat corresponding to the seat number is displayed on the table information screen 95. It should be noted that, S32 can be configured to, to the user of the waitperson terminal 62 selected in S28, display only the preparation completion information for the seat he/she is in charge.

A menu reception information storage step (S33) is a step of, based on the selection and transmission operations on the user terminal 3 having received the preparation completion information, storing the reception information of a menu received by the user of the user terminal 3. S33 is performed by the menu reception information storage means 41. S33 is performed in a similar procedure to S11.

A menu reception information transmission step (S34) is a step of transmitting the menu reception information stored in S33 to the kitchen terminal 4. S34 transmits the reception information stored in S33 also to the user terminal 3 having transmitted the menu reception information. A procedure for transmitting the reception information to the kitchen terminal 4 and to the user terminal 3 is similar to S12. Furthermore, S34 transmits the reception information stored in S33 also to the waitperson terminal 62.

A menu evaluation information registration step (S35) is a step of, based on the selection and transmission operations on the user terminal 3 having received the preparation completion information, registering evaluation information of the menu received by the user of the user terminal 3 in association with the restaurant information. S35 is performed by the menu evaluation information registration means 43. S35 is performed in a similar procedure to S13.

A waitperson evaluation reception step (S36) is a step of receiving an evaluation for the waitperson selected in S28 from the user terminal 3 having selected said waitperson. S36 is performed by the waitperson evaluation reception means 86. S36 displays, on the display unit 18 of the user terminal 3 having selected the waitperson in S28, an evaluation accepting screen for accepting evaluation information for the waitperson. S36 receives the evaluation information for the waitperson transmitted from the user terminal 3 based on the input and transmission operation on the evaluation accepting screen. It should be noted that S36 can also receive the evaluation information for the waitperson selected by the restaurant.

A waitperson evaluation registration step (S37) is a step of registering the evaluation information received in S36 in association with the restaurant information. S37 is performed by the waitperson evaluation registration means 87.

In S37, the evaluation information received in S36 is registered in association with the waitperson information registered in S28.

A checkout step (S38) is a step of performing checkout based on an operation on the user terminal 3. S38 is performed by the checkout means 44. S38 is performed in a similar procedure to S14. In S38, a checkout procedure including tipping according to, for example, the evaluation of the waitperson can also be performed.

### Advantages

In addition to the advantages of the order management system 1, in the order management system 61, the restaurant information registration means 80 registers the waitperson terminal information including the waitperson terminal identification data as the restaurant information, and the preparation completion information transmission means 84 transmits the preparation completion information to the waitperson terminal 62, allowing a waitperson to understand the preparation status of a menu in the kitchen without going to a particular place such as a kitchen, and to efficiently deliver menus according to the preparation status of menus. In addition, such a configuration allows a waitperson to smoothly respond to inquiries from customers about the preparation status of menus.

In the order management system 61, by allowing the user terminal 3 to select a specific waitperson terminal, a waitperson to be in charge of a user of said user terminal can be selected. This allows easy selection of a waitperson to be in charge preferentially or exclusively.

In the order management system 61, the preparation completion information and the waitperson terminal information of the waitperson terminal 62 selected by the waitperson selection means 83 can be displayed on the waitperson terminal 62 in association with each other. This allows a waitperson to correctly understand preparation statuses of menus in the kitchen for the customer of whom he/she is in charge via the waitperson terminal 62, and to arrange delivery of the menus more efficiently.

The order management system 61 includes: the waitperson evaluation reception means 86 for receiving an evaluation of a waitperson selected by the waitperson selection means 83 from the user terminal 3 having selected said waitperson; and the waitperson evaluation registration means 87 for registering the evaluation, which is received by the waitperson evaluation reception means 86, in association with the restaurant information. As a result, more correct evaluation can be obtained from the customers actually served by the waitperson, and waitperson's awareness of service can be improved.

Since the order management system 61 can transmit vacant seat information to the waitperson terminal 62, correct guiding of customers to seats based on vacancy status is possible.

### Third Embodiment

### Order Management System

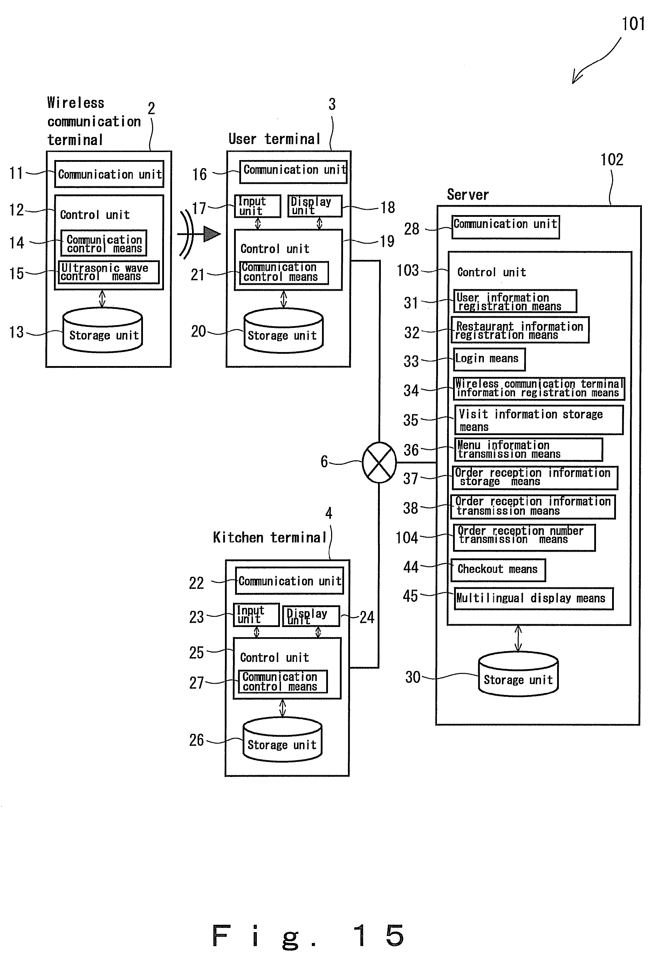

An order management system 101 of FIG. 15 includes a wireless communication terminal 2, a user terminal 3, a kitchen terminal 4, a server 102, and a communication network 6. In the order management system 101, there are actually a plurality of wireless communication terminals 2, a plurality of user terminals 3, and a plurality of kitchen terminals 4. However, in FIG. 15, only one is explained for respective members for the sake of simplicity. Configurations similar to those of the order management system 1 of FIG. 1 and those of the order management system 61 of FIG. 9 are referred to by the same numerals and description thereof is omitted.

### Server

The server 102 has a communication unit 28, a control unit 103, and a storage unit 30. The server 102 is configured to be able to communicate with the user terminal 3 across the first network. The server 5 is also configured to be able to communicate with the kitchen terminal 4 across the second network. The server 102 can be composed of either one computer or a plurality of computers. The server 102 can be provided with a predetermined input device etc.

The control unit 103 includes an arithmetic processing unit. The control unit 103 includes a user information registration means 31, a restaurant information registration means 32, a login means 33, a wireless communication terminal information registration means 34, a visit information storage means 35, a menu information transmission means 36, an order reception information storage means 37, an order reception information transmission means 38, an order reception number transmission means 104, a checkout means 44, and a multilingual display means 45.

The order reception number transmission means 104 transmits an order reception number associated with the order reception information stored in the order reception information storage means 37 to the user terminal 3 having transmitted said order reception information. In addition, the order reception number transmission means 104 also transmits the order reception number to the kitchen terminal 4.

### Operation Procedure

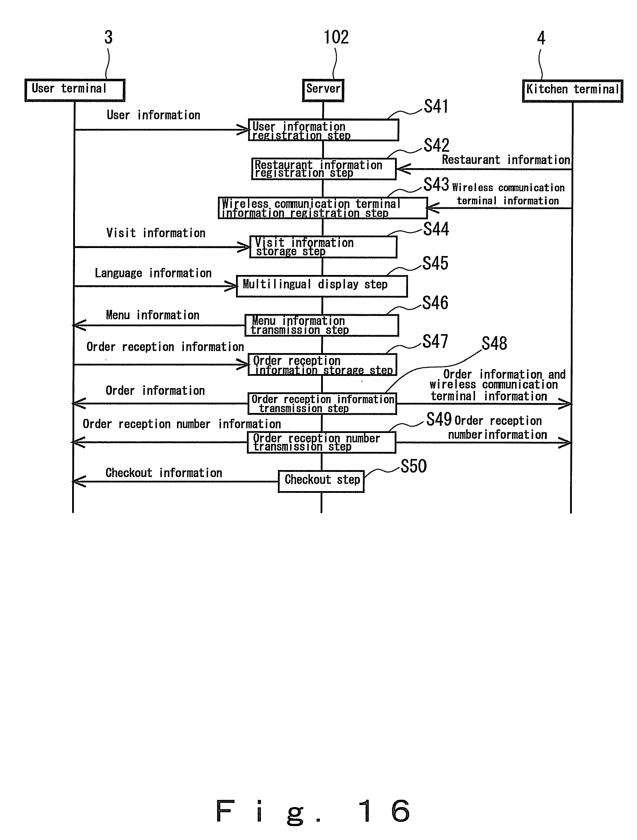

The operation procedure of the order management system 101 is described hereinafter with reference to FIG. 16.

A user information registration step (S41) is a step of registering user information including user identification data of the user terminal 3. S41 is performed by the user information registration means 31. S41 is performed in a similar procedure to S1.

A restaurant information registration step (S42) is a step of registering restaurant information including restaurant identification data, kitchen terminal identification data, and menu information. S42 is performed by the restaurant information registration means 32. S42 is performed in a similar procedure to S2.

A wireless communication terminal information registration step (S43) is a step of registering wireless communication terminal information including wireless communication terminal identification data in association with the restaurant information. S43 is performed by the wireless communication terminal information registration means 34. S43 is performed in a similar procedure to S3.

A visit information storage step (S44) is a step of storing visit information which: includes the wireless communication terminal identification data that the user terminal 3 has received through wireless communication and the user identification data of the user terminal 3; and is transmitted from the user terminal 3. S44 is performed by the visit information storage means 35. S44 is performed in a similar procedure to S4.

A multilingual display step (S45) is a step of displaying on the user terminal 3 information in a language selected on the user terminal 3. S45 is performed by the multilingual display means 45. S45 is performed in a similar procedure to S5.

A menu information transmission step (S46) is a step of transmitting menu information corresponding to the wireless communication terminal identification data stored in S44 to the user terminal 3 having submitted the visit information. S46 is performed by the menu information transmission means 36. S46 is performed in a similar procedure to S6.

An order reception information storage step (S47) is a step of storing order reception information including: order information selected by the user based on the menu information, which has been transmitted to the user terminal 3, and transmitted from the user terminal 3; and the visit information. S47 is performed by the order reception information storage means 37. S47 is performed in a similar procedure to S7.

An order reception information transmission step (S48) is a step of transmitting at least the order information and the wireless communication terminal information, among the order reception information, to the corresponding kitchen terminal 4. S8 is performed by the order reception information transmission means 38. In addition, S48 transmits at least the order information, among the order reception information stored in S47, to the user terminal 3 having transmitted the order information. S48 is performed in a similar procedure to S8.

An order reception number submission step (S49) is a step of transmitting an order reception number associated with the order reception information stored in S47 to the user terminal 3 having transmitted the order reception information. S49 is performed by the order reception number transmission means 104. S49 transmits the order reception number associated with the order reception information stored in S47 to the user terminal 3 having transmitted the order reception information, and displays the order reception number on the display unit 18 of the user terminal 3. In addition, S49 transmits the order reception number associated with the order reception information stored in S47 also to the kitchen terminal 4, and displays the order reception number on the display unit 24 of the kitchen terminal 4.

A checkout step (S50) is a step of performing checkout based on an operation on the user terminal 3. S50 is performed by the checkout means 44. S50 is performed in a similar procedure to S14.

### Advantages

Since the order management system 101 transmits the menu information to the user terminal 3 based on wireless communication between the wireless communication terminal 2 and the user terminal 3, a customer can therefore voluntarily check the menu information displayed on his/her own user terminal 3. Consequently, according to the order management system 101, for example even in the case of a large number of customers being seated at a table, each person can display the menu information on his/her own user terminal 3 and can look at the menu information independently and simultaneously. In addition, in the order management system 101, the server 102 receives the order information regarding a menu, among the menu information displayed on the user terminal 3, selected by a user of said user terminal 3 and can transmit the order information to the kitchen terminal 4, to thereby eliminate the need to call a waitperson for placing an order and allow efficient placement of order as necessary.

The order management system 101 can transmit an order reception number associated with the order reception information stored in the order reception information storage means 37 to the user terminal having transmitted said order reception information. This allows a customer to confirm a menu that he/she has ordered based on the order reception number. Consequently, in the order management system 101, for example, when the kitchen terminal 4 reads out an order reception number corresponding to a prepared menu, a user of the user terminal 3 can check the order reception number being read and go to the kitchen, etc. as necessary to pick up the menu that he/she has ordered.

### Other Embodiments

It should be noted that the order management system, the order management method, and the program according to the present invention can be carried out, in addition to the above described modes, with various modifications and improvements. For example, the configurations of the above described embodiments can be combined accordingly. More specifically, the order management systems of the first embodiment and the third embodiment can be provided with the waitperson terminal. Furthermore, the order management systems of the first embodiment and the second embodiment can be provided with the order reception number transmission means.

The wireless communication terminal is not necessarily configured as an ultrasonic wave transmission device. For example in the case of the user terminal having a non-contact IC chip, the wireless communication terminal can be configured as a reader/writer that can establish near field communication with the non-contact IC chip. Alternatively, a wireless communication terminal such as a Bluetooth communication terminal can be used as the wireless communication terminal.

In the order management system, the order management method, and the program, in the case of the waitperson terminal being involved, the server can be configured to display the menu information on the waitperson terminal and to receive the order information from the waitperson terminal. In addition, the order management system, the order management method, and the program can be configured such that a terminal which can display menu information is provided at each seat and the server can receive the order information from the terminal. In such a configuration, even when a customer having no user terminal comes to the restaurant, the order management system, the order management method, and the program enable an order from the customer to be smoothly received.

In the order management system, the order management method, and the program, the checkout means can be configured to check out each user terminal or to check out each seat instead of each user terminal. As a result, for example in the case of family customers, checkout for each family can be made easily and infallibly.

### [INDUSTRIAL APPLICABILITY]

As discussed heretofore, the order management system, the order management method, and the program according to the present invention can eliminate the need to call a waitperson and allow each person to efficiently place an order as necessary. As a result, the order management system, the order management method, and the program according to the present invention are preferably used as an order management system, an order management method, and a program for restaurants.

### [EXPLANATION OF THE REFERENCE SYMBOLS]

1 Order management system
2 Wireless communication terminal
3 User terminal
4 Kitchen terminal
5 Server
6 Communication network
11 Communication unit
12 Control unit
13 Storage unit
14 Communication control means
15 Ultrasonic wave control means
16 Communication unit
17 Input unit
18 Display unit
19 Control unit
20 Storage unit
21 Communication control means
22 Communication unit
23 Input unit
24 Display unit
25 Control unit
26 Storage unit
27 Communication control means
28 Communication unit
29 Control unit
30 Storage unit
31 User information registration means
32 Restaurant information registration means
33 Login means
34 Wireless communication terminal information registration means
35 Visit information storage means
36 Menu information transmission means
37 Order reception information storage means
38 Order reception information transmission means
39 Preparation completion information storage means
40 Preparation completion information transmission means
41 Menu reception information storage means
42 Menu reception information transmission means
43 Menu evaluation information registration means
44 Checkout means
45 Multilingual display means
46 Approaching screen
47 Receive button
48 Login screen
49 Restaurant menu screen
50 Language selection button
51 Language selection screen
52 Order timeline screen
53 Seat number display portion
54 Finish button
55 Preparation completion flag
56 Menu reception flag
57 Order history screen
58 Preparation completion flag
59 Menu reception flag
60 Confirmation button
61 Order management system
62 Waitperson terminal
63 Server
64 Communication network
71 Communication unit
72 Input unit
73 Display unit
74 Control unit
75 Storage unit
76 Communication control means
77 Communication unit
78 Control unit
79 Storage unit
80 Restaurant information registration means
81 Login means
82 Vacant seat information transmission means
83 Waitperson selection means
84 Preparation completion information transmission means
85 Menu reception information transmission means
86 Waitperson evaluation reception means
87 Waitperson evaluation registration means
88 Restaurant menu screen
89 Waitperson selection button
90 Waitperson screen
91 New waitperson registration button
92 Waitperson display unit
93 Waitperson registration screen
94 Registration button
95 Table information screen
96 Seat number display portion
101 Order management system
102 Server
103 Control unit
104 Order reception number transmission means

## Claims

1. An order management system comprising a server that communicates with a user terminal, which is capable of wireless communication with a wireless communication terminal, across a first network and with a kitchen terminal across a second network,
wherein the server comprises:
a user information registration means for registering user information including user identification data of the user terminal;
a restaurant information registration means for registering restaurant information including restaurant identification data, kitchen terminal identification data, and menu information;
a wireless communication terminal information registration means for registering wireless communication terminal information including wireless communication terminal identification data in association with the restaurant information;
a visit information storage means for storing visit information, which includes the wireless communication terminal identification data received by the user terminal via wireless communication and the user identification data of the user terminal, the visit information being transmitted from said user terminal;
a menu information transmission means for transmitting corresponding menu information to the user terminal having transmitted the visit information;
an order receipt information storage means for storing order receipt information including order information, which is selected by a user based on the menu information transmitted to the user terminal and transmitted from the user terminal, and the visit information; and
an order receipt information transmission means for transmitting at least the order information among the order receipt information and the wireless communication terminal information to a corresponding kitchen terminal.

2. The order management system according to claim 1, wherein the order receipt information transmission means transmits at least the order information among the order receipt information to the user terminal having transmitted the order receipt information.

3. The order management system according to claim 1 or 2,
wherein the server comprises:
a preparation completion information storage means for storing preparation completion information transmitted from the kitchen terminal in response to the order receipt information; and
a preparation completion information transmission means for transmitting the preparation completion information to the kitchen terminal and to the user terminal having transmitted the order receipt information.

4. The order management system according to claim 3,
wherein the server comprises:
a menu reception information storage means for, based on selection and transmission operations from the user terminal having received the preparation completion information, storing reception information of a menu received by a user of said user terminal; and
a menu reception information transmission means for transmitting the reception information stored in the menu reception information storage means to the kitchen terminal.

5. The order management system according to claim 3 or 4,
wherein the server comprises a menu evaluation information registration means for, based on selection and transmission operations from the user terminal having received the preparation completion information, registering evaluation information for the menu received by a user of said user terminal in association with the restaurant information.

6. The order management system according to any one of claims 1 to 5, wherein the order reception information transmission means displays the order information included in the order reception information, in association with the wireless communication terminal information included in said order reception information, on the corresponding kitchen terminal in a chronological order.

7. The order management system according to any one of claims 1 to 6, wherein:
the restaurant information registration means registers seat information of a restaurant as the restaurant information; and
the wireless communication terminal information registration means registers the wireless communication terminal information in association with the seat information.

8. The order management system according to any one of claims 1 to 7, wherein the server comprises an order reception number transmission means for transmitting an order reception number associated with the order reception information stored in the order reception information storage means to the user terminal having transmitted said order reception information.

9. The order management system according to claim 3,
wherein:
the server communicates with a waitperson terminal across a third network;
the restaurant information registration means registers, as the restaurant information, waitperson terminal information including waitperson terminal identification data; and
the preparation completion information transmission means transmits the preparation completion information to the waitperson terminal.

10. The order management system according to claim 9,
wherein the server comprises a waitperson selection means for having a specific waitperson terminal selected on the user terminal to thereby select a waitperson in charge of a user of said user terminal.

11. The order management system according to claim 10,
wherein the preparation completion information transmission means displays on the waitperson terminal the preparation completion information in association with the waitperson terminal information of the waitperson terminal selected by the waitperson selection means.

12. The order management system according to claim 10 or 11,
wherein the server comprises:
a waitperson evaluation reception means for receiving an evaluation of a waitperson selected by the waitperson selection means from the user terminal having selected said waitperson; and
a waitperson evaluation registration means for registering the evaluation, which is received by the waitperson evaluation reception means, in association with the restaurant information.

13. The order management system according to any one of claims 9 to 12, wherein the server comprises a vacant seat information transmission means for transmitting vacant seat information to the waitperson terminal.

14. The order management system according to any one of claims 1 to 13, wherein the server comprises a checkout means for checking out based on an operation on the user terminal.

15. The order management system according to any one of claims 1 to 14, wherein the server comprises a multilingual display means.

16. An order management method employing a server that communicates with a user terminal, which is capable of wireless communication with a wireless communication terminal, across a first network and with a kitchen terminal across a second network,
wherein the server comprises:
a user information registration step of registering user information including user identification data of the user terminal;
a restaurant information registration step of registering restaurant information including restaurant identification data, kitchen terminal identification data, and menu information;
a wireless communication terminal information registration step of registering wireless communication terminal information including wireless communication terminal identification data in association with the restaurant information;
a visit information storage step of storing visit information, which includes the wireless communication terminal identification data received by the user terminal via wireless communication and the user identification data of the user terminal, the visit information being transmitted from said user terminal;
a menu information transmission step of transmitting corresponding menu information to the user terminal having transmitted the visit information;
an order receipt information storage step of storing order receipt information including order information, which is selected by a user based on the menu information transmitted to the user terminal and transmitted from the user terminal, and the visit information; and
an order receipt information transmission step of transmitting at least the order information among the order receipt information and the wireless communication terminal information to a corresponding kitchen terminal.

17. A program for making a computer execute an order management method employing a server that communicates with a user terminal, which is capable of wireless communication with a wireless communication terminal, across a first network and with a kitchen terminal across a second network,
wherein the program makes the server function as:
a user information registration means for registering user information including user identification data of the user terminal;
a restaurant information registration means for registering restaurant information including restaurant identification data, kitchen terminal identification data, and menu information;
a wireless communication terminal information registration means for registering wireless communication terminal information including wireless communication terminal identification data in association with the restaurant information;
a visit information storage means for storing visit information, which includes the wireless communication terminal identification data received by the user terminal via wireless communication and the user identification data of the user terminal, the visit information being transmitted from said user terminal;
a menu information transmission means for transmitting corresponding menu information to the user terminal having transmitted the visit information;
an order receipt information storage means for storing order receipt information including order information, which is selected by a user based on the menu information transmitted to the user terminal and transmitted from the user terminal, and the visit information; and
an order receipt information transmission means for transmitting at least the order information among the order receipt information and the wireless communication terminal information to a corresponding kitchen terminal.
